# EUROPÄISCHE PATENTSCHRIFT

(11) **EP 2 276 813 B1**
(45) Veröffentlichungstag und Bekanntmachung des Hinweises auf die Patenterteilung: **21.11.2012**
(21) Anmeldenummer: 09745711.3
(22) Anmeldetag: 11.05.2009
(51) Int. Cl.: C08G 18/08, C08L 75/04, C08L 101/00

(54) **VERFAHREN ZUR HERSTELLUNG VON POLYOLDISPERSIONEN**
METHOD FOR PRODUCING POLYOL DISPERSIONS
PROCÉDÉ DE PRODUCTION DE DISPERSIONS DE POLYOL

(30) Priorität: 13.05.2008 EP 08156058
(43) Veröffentlichungstag der Anmeldung: 26.01.2011
(73) Patentinhaber: BASF SE, 67056 Ludwigshafen (DE)
(72) Erfinder: FREIDANK, Daniel, 49448 Lemförde (DE); EMGE, Andreas, 49448 Lemförde (DE); JUDAT, Sonja, 67067 Ludwigshafen (DE); ENGEL, Robert, 67346 Speyer (DE); MARTN, Ingrid, 49448 Lemförde (DE); DANNER, Thomas, 69469 Weinheim (DE); LÖFFLER, Achim, 67346 Speyer (DE); HESS, Stephan, 69221 Dossenheim (DE)
(86) Internationale Anmeldenummer: PCT/EP2009/055661
(87) Internationale Veröffentlichungsnummer: WO 2009/138379

(56) Entgegenhaltungen:
- WO-A2-02/28937

## Beschreibung

Die vorliegende Erfindung betrifft eine Dispersion, enthaltend wenigstens ein flüssiges Polymer und wenigstens ein Polymerpartikelgemisch umfassend wenigstens einen schmelzbaren Feststoff und wenigstens ein Copolymer (C), wobei das wenigstens eine Copolymer (C) ein statistisches Copolymer ist aufgebaut aus wenigstens einem α,β-ethylenisch ungesättigten Monomer und wenigstens einem polymerisierbaren Polymer aus der Klasse der flüssigen Polymere, ein Verfahren zur Herstellung dieser Dispersion, die Verwendung einer Dispersion zur Herstellung von Polyurethanen, sowie ein Verfahren zur Herstellung von Polyurethanen, wobei mindestens eine solche Dispersion mit mindestens einem Polyisocyanat umgesetzt wird.

Dispersionen mit flüssigen Polymeren, beispielsweise Polyolen, als flüssiger Phase werden für verschiedene Anwendungen eingesetzt. So werden Polyoldispersionen beispielsweise als Lackrohstoffe verwendet.

Polyoldispersionen werden häufig in Polyurethanrezepturen eingesetzt, um die mechanischen Eigenschaften, insbesondere von Polyurethanschäumen zu verbessern.

Verfahren zur Herstellung von Dispersionen, die Polymere als flüssige Phase enthalten, sind aus dem Stand der Technik grundsätzlich bekannt.

Aus dem Stand der Technik sind so genannte Graft-Polyole bekannt, die durch radikalische Copolymerisation von beispielsweise Acrylnitril und Styrol in klassischen Polyetherolen als Matrix hergestellt werden. Diese Polymerisation findet unter Anwesenheit von so genannten Makromeren statt, die aus einer dispersionsstabilisierenden Polyetherkette und einer an der Copolymerisation beteiligten Olefingruppe bestehen. Die so hergestellte Dispersion besteht aus Partikeln mit einem typischen Durchmesser von 1 µm, mit einem Kern aus Polyolefin und einer Polyetherschale, die kompatibel zum Matrixpolyol ist, und ein Agglomerieren der Partikel verhindert.

Graftpolyole mit kleinen Teilchen und monomodaler Teilchengrössenverteilung lassen sich beispielsweise durch Semi-Batch-Reaktionen herstellen, wie sie in einer Reihe von Patenten beschrieben sind.

EP 0 221 412 A2 offenbart Graftpolymer-Dispersionen in Polyoxyalkylen-PolyetherPolyolen zur Herstellung von Polyurethan-Schäumen. Die Graftpolymere werden durch radikalische Polymerisation hergestellt. US 4,568,705 und US 4,522,976 offenbaren niedrigviskose stabile Graftpolymer-Dispersionen, die ebenfalls durch radikalische Polymerisation im Polyol selbst hergestellt werden. Der Einsatz der Graftpolymere zur Herstellung von Polyurethanen wird ebenfalls offenbart.

Aus WO 01/27185 ist ein Verfahren zur Herstellung von Polyether-Polyester-Copolymeren bekannt, bei dem Polyesteralkohole unter Verwendung von Multimetallcyanidkatalysatoren mit Alkylenoxiden umgesetzt werden. Deren Verwendung für die Herstellung von Polyurethanen wird ebenfalls offenbart.

Auch WO 03/076488 betrifft ein Verfahren zur Herstellung von Polyetheralkoholen unter Verwendung mindestens eines Doppelmetallcyanidkatalysators. Weiter werden Verfahren zur Herstellung von Polyurethanen unter Verwendung der dort offenbarten Polyetheralkohole beschrieben.

WO 02/28937 A2 offenbart eine Dispersion eines Polymers, beispielsweise Polyolefine wie Polyethylen, Polypropylen oder Polystyrol, in einem Polyol. In der Dispersion können gegebenenfalls stabilisierende Verbindungen vorliegen, die anionisch, kationisch, nicht ionisch oder polymer sein können. Beispielsweise wird ein mit Maleinsäureanhydrid funktionalisiertes Polethylen-Wachs oder ein Umsetzungsprodukt eines EthylenAcrylsäure-Copolymers (EAA-Copolymer) und einem Monoamin-Polyol als stabilisierende Verbindung eingesetzt.

EP 0 448 166 A2 offenbart eine Dispersion enthaltend wenigstens ein Polymer erhältlich durch Polymerisation von wenigstens einem olefinischen Monomer, wobei dieses Polymer Seitenketten mit wenigstens 10 Kohlenstoffatomen aufweist. In der flüssigen Phase liegen oberflächenaktive Substanzen, beispielsweise Alkohol-Ethoxy-Sulfate oder Lignosulphonate, vor.

Nachteilig an den bekannten Dispersionen ist, dass keine emulgierende Verbindung offenbart wird, die universell für eine Reihe von verschiedenen thermoplastischen Polymeren zur Herstellung einer stabilen Dispersion verwendet werden kann. Des Weiteren ist für die vorgeschlagenen Graft-Polymere zunächst eine aufwändige Synthese von Makromeren nötig, die dann in die Polymerisation eingesetzt werden. Auch die Polymerisation selbst erfordert einen hohen sicherheitstechnischen Aufwand. Die Notwendigkeit, nach der Reaktion nicht umgesetztes Restmonomer zu entfernen, ist dabei ebenfalls als nachteilig zu nennen.

Darüber hinaus ist eine Herstellung derartiger Dispersionen teuer und nicht für alle Dispersionen, die ein flüssiges Polymer als flüssige Phase enthalten, möglich.

Ausgehend von diesem Stand der Technik liegt eine Aufgabe der vorliegenden Erfindung darin, Dispersionen bereitzustellen, die einfach und kostengünstig hergestellt werden können. Des Weiteren soll es möglich sein, dass mit den bereitzustellenden Dispersionen eine Reihe von schmelzbaren Feststoffen dispergiert werden können, und dass stabile Dispersionen zugänglich sind.

Eine weitere der Erfindung zugrunde liegende Aufgabe besteht darin, Dispersionen, insbesondere Polyoldispersionen, bereitzustellen, deren Eigenschaften leicht angepasst werden können.

Diese Aufgaben werden erfindungsgemäß gelöst durch eine Dispersion, enthaltend
(i) wenigstens ein bei 25°C und 1013 mbar flüssiges Polymer und
(ii) wenigstens ein Polymerpartikelgemisch umfassend wenigstens einen schmelzbaren Feststoff und wenigstens ein statistisches Copolymer (C),
wobei das wenigstens eine Copolymer (C) ein Copolymer ist aufgebaut aus wenigstens einem α,β-ethylenisch ungesättigten Monomer und wenigstens einem polymerisierbaren Polymer aus der Klasse der flüssigen Polymere ausgewählt aus der Gruppe bestehend aus Polyolen, die auf einem ungesättigten Starteralkohol basieren, oder durch Umsetzung der Polyole mit ungesättigten Säuren oder Estern oder Isocyanaten erhalten werden, polymeren Isocyanaten, die durch Umsetzung von NCO-terminierten polymeren Isocyanaten mit Hydroxyalkoylacrylaten oder -methacrylaten erhalten werden, Polyurethan-Präpolymeren, die durch Umsetzung NCO-terminierten Polyurethan-Präpolymeren mit Hydroxyalkoylacrylaten oder -methacrylaten erhalten werden, Poly(meth)acrylaten, die durch Umsetzung von Poly(meth)acrylaten mit ungesättigten Alkoholen erhalten werden, Polyisobuten, das durch Umsetzung von PIBSA (Polyisobuten-Bernsteinsäure-Anhydrid) mit ungesättigten Alkoholen erhalten wird, und Mischungen davon.

Im Rahmen der vorliegenden Erfindung wird unter einem flüssigen Polymer ein Polymer verstanden, welches bei Normalbedingungen, d.h. 25 °C und 1013 mbar, im flüssigen Zustand vorliegt.

Unter Polymeren, Blockcopolymeren bzw. Copolymeren werden im Rahmen der vorliegenden Erfindung polymere Verbindungen verstanden, die nach dem Fachmann bekannten Verfahren für Polymere charakterisiert werden können und üblicherweise eine Molekulargewichtsverteilung aufweisen. Auch die Struktur der einzelnen Moleküle kann im Rahmen der bei Polymeren üblichen Verteilung voneinander abweichen.

Im Rahmen der vorliegenden Erfindung wird unter einem Polymerpartikelgemisch ein Gemisch von Polymerpartikeln verstanden, wobei alle Polymerpartikel des jeweiligen Polymerpartikelgemischs denselben schmelzbaren Feststoff und dasselbe Copolymer (C) enthalten, aber beispielsweise das Verhältnis des schmelzbaren Feststoffes und des Copolymers (C) in den einzelnen Polymerpartikeln oder der Teilchendurchmesser der einzelnen Polymerpartikel voneinander abweichen kann.

Dabei weisen die Polymerpartikel erfindungsgemäß vorzugsweise eine derartige Struktur auf, dass das Copolymer (C) jeweils an der Grenzfläche der Polymerpartikel angeordnet ist. Das Copolymer (C) wirkt demgemäß im Rahmen der vorliegenden Erfindung in den erfindungsgemäßen Dispersionen als grenzflächenaktive Substanz. Der schmelzbare Feststoff und das Copolymer (C) können in den Polymerpartikeln beispielsweise in cokristallisierter Form vorliegen.
Die erfindungsgemäßen Dispersionen können auf einfache Weise hergestellt werden. Dabei ist es insbesondere nicht nötig, dass eine Polymerisation im flüssigen Polymer, insbesondere Polyol, durchgeführt werden muss, bei der eine Abtrennung von Monomer erforderlich werden würde. Dadurch besteht auch eine breitere Variationsmöglichkeit, flüssiges Polymer und schmelzbaren Feststoff zu kombinieren, d.h., es besteht keine Einschränkung auf bestimmte Polymere, die im entsprechenden flüssigen Polymer, durch Polymerisation hergestellt werden können. Erfindungsgemäß kann es sich bei dem bevorzugt als schmelzbaren Feststoff eingesetzten thermoplastischen Polymer (P) auch um einen Massenkunststoff oder ein Recycling-Produkt handeln.

Die erfindungsgemäßen Dispersionen erlauben es, in die kontinuierliche Phase einen kostengünstigen schmelzbaren Feststoff einzubringen. Damit kann eine Kostenreduktion erreicht werden, ohne die Eigenschaften des Trägermaterials zu verschlechtern. Darüber hinaus kann durch die Wahl des schmelzbaren Feststoffes, insbesondere des thermoplastischen Polymers (P), auch eine Einstellung der Eigenschaften der Dispersion erfolgen.

Die erfindungsgemäßen Dispersionen sind durch die Verwendung von schmelzbaren Feststoffen zur Erhöhung des Feststoffanteils kostengünstig, da verschiedene kostengünstige Stoffe, beispielsweise auch recycelte thermoplastische Polymere, eingesetzt werden können. Darüber hinaus ist die Teilchengrößenverteilung der Partikel in der Dispersion in weiten Bereichen einstellbar.

Dispersionen umfassend ein flüssiges Polymer als flüssige Phase weisen gegenüber wässrigen Dispersionen üblicherweise eine höhere Viskosität auf. Daher müssen der schmelzbare Feststoff und das eingesetzte Copolymer (C) auf das flüssige Polymer bzw. auf die Eigenschaften des flüssigen Polymers abgestimmt werden.

In der erfindungsgemäßen Dispersion liegt als Komponente (i) wenigstens ein flüssiges Polymer vor. In einer bevorzugten Ausführungsform der erfindungsgemäßen Dispersion ist das flüssige Polymer ausgewählt aus der Gruppe bestehend aus Polyolen, polymeren Isocyanaten, Polyacrylaten, filmbildenden Polymeren, Polyurethan-Präpolymeren, Polyisobuten und Mischungen davon, besonders bevorzugt Polyole.

Ein geeignetes flüssiges Polymer, insbesondere Polyol, ist im Rahmen der vorliegenden Erfindung beispielsweise ein Polymer mit einem Molekulargewicht (Mw) größer als 200 g/mol und kleiner als 1.000.000 g/mol, bevorzugt größer als 300 g/mol und kleiner als 50.000 g/mol.

Derartige Polymere können beispielsweise aus synthetischen Rohstoffen hergestellt werden oder aus nachwachsenden Rohstoffen stammen, wie beispielsweise Fettalkohole. Geeignete Polyole können beispielsweise über Polyaddition oder Polymerisation hergestellt werden.

In einer bevorzugten Ausführungsform der vorliegenden Erfindung ist das wenigstens eine Polyol ausgewählt aus der Gruppe bestehend aus Polyetherolen, Polyesterolen und Mischungen davon.

Erfindungsgemäß geeignet als Polyol sind Verbindungen mit einer Hydroxylgruppen-Funktionalität von 2 bis 8, vorzugsweise 2 bis 6, und einem mittleren Molekulargewicht von 200 bis 20000 g/mol, vorzugsweise von 300 bis 8000 g/mol, besonders bevorzugt von 300 bis 5000 g/mol. Die Hydroxylzahl der Polyhydroxylverbindungen beträgt dabei in aller Regel 20 bis 160 und vorzugsweise 28 bis 70. Die Hydroxyzahl kann beispielsweise durch quantitativen Umsatz der Hydroxygruppen mit Essigsäureanhydrid und Titration der gebildeten Essigsäure mittels KOH bestimmt werden.

Das mittlere Molekulargewicht kann beispielsweise mittels Gelpermeationschromatographie (GPC) bestimmt werden. Geeignete Verfahren sind dem Fachmann grundsätzlich bekannt. Als Standards für die GPC-Messungen können beispielsweise Polystyrol oder insbesondere für die Messung von Estern Polymethylmethacrylat eingesetzt werden.

Zur Charakterisierung der Polyole sind auch die Viskosität und die lodzahl geeignet. Dabei liegt die Viskosität beispielsweise im Bereich von 10 bis 100000 mPas, insbesondere im Bereich von 25 bis 50000 mPas, bevorzugt im Bereich von 30 bis 30000 mPas, besonders bevorzugt 40 bis 10000 mPas, weiter bevorzugt im Bereich von 50 bis 5000 mPas. Insbesondere liegt die Viskosität im Rahmen der vorliegenden Erfindung im Bereich von 100 bis 2500 mPas, weiter bevorzugt im Bereich von 200 bis 1000 mPas.

Die Iodzahl der Polyole liegt im Rahmen der vorliegenden Erfindung beispielsweise bei < 10 g lod/100 g Polymer, insbesondere bei < 5 g lod/100 g Polymer, bevorzugt bei < 2,5 g lod/100 g Polymer, besonders bevorzugt bei < 2,0 g Iod/100 g Polymer.

Erfindungsgemäß geeignete Polyole können beispielsweise durch Alkoxylierung mit Propylenoxid und Ethylenoxid unter Verwendung von Startmolekülen mit Amin- oder Hydroxylgruppen hergestellt werden. Geeignete Verbindungen sind beispielsweise in WO 03/076488 beschrieben.

Erfindungsgemäß geeignete Polyole sind beispielsweise Polyetherpolyole auf Basis von Propylenglykol, Propylenoxid und Ethylenoxid, Polyetherpolyole auf Basis von Glycerin, Propylenoxid und Ethylenoxid, Polyetherpolyole auf Basis von Glycerin, Propylenoxid und Ethylenoxid, Polyetherpolyole auf Basis von Glycerin, Propylenoxid und Ethylenoxid, Polyetherpolyole auf Basis von Trimethylolpropan, Propylenoxid, oder Polyetherpolyole auf Basis von Toluoldiamin, Propylenoxid und Ethylenoxid.

Daher betrifft die vorliegende Erfindung gemäß einer weiteren Ausführungsform auch eine wie zuvor beschriebene Polyoldispersion, wobei das mindestens eine Polyol ausgewählt ist aus der Gruppe bestehend aus Polyetherolen und Polyesterolen.

Erfindungsgemäß als flüssige Phase geeignet sind auch Graft- oder Polymerpolyole mit Teilchen einer Größe, die unterschiedlich ist zu der Teilchengröße, die durch den Dispergierprozess eingestellt wird.

Erfindungsgemäß kann die Dispersion bzw. die Polyoldispersion auch mehrere flüssige Polymere enthalten.

Die erfindungsgemäßen Polyoldispersionen können ein oder mehrere Polyole enthalten. Die Polyole können sich beispielsweise in der OH-Zahl, der chemischen Struktur, der Funktionalität oder dem primären OH-Gruppengehalt unterscheiden. Ebenso ist es im Rahmen der vorliegenden Erfindung möglich, dass die erfindungsgemäßen Dispersion bzw. Polyoldispersionen ein oder mehrere verschiedene Partikel- bzw. Polymerpartikelgemische enthalten.

In der erfindungsgemäßen Dispersion liegt als Komponente (ii) wenigstens ein Polymerpartikelgemisch umfassend wenigstens einen schmelzbaren Festsoff und wenigstens ein Copolymer (C) vor.

In einer weiteren Ausführungsform kann die erfindungsgemäße Dispersion zusätzlich zu dem Copolymer (C) wenigstens ein weiter unten genanntes Copolymer (C') enthalten. Die dort genannten bevorzugten Ausführungsformen gelten entsprechend.

In einer bevorzugten Ausführungsform der erfindungsgemäßen Dispersion ist der wenigstens eine schmelzbare Feststoff ausgewählt aus der Gruppe bestehend aus Schwefel, Harnstoff, Phosphor, bevorzugt roter Phosphor, thermoplastischen Polymeren (P) und Mischungen davon. Besonders bevorzugt ist der wenigstens eine schmelzbare Feststoff ein thermoplastisches Polymer (P).

Erfindungsgemäß können alle thermoplastischen Polymere (P) in der erfindungsgemäßen Polyoldispersion eingesetzt werden, sofern geeignete Copolymere (C) vorhanden sind. Erfindungsgemäß können auch Gemische verschiedener thermoplastischer Polymere (P) eingesetzt werden.

Erfindungsgemäß geeignete thermoplastische Polymere (P) weisen üblicherweise in mittleres Molekulargewicht von 1000 bis 5000000 g/mol auf, bevorzugt 1000 bis 100000 g/mol. besonders bevorzugt 2000 bis 20000 g/mol. Dabei werden die Molekulargewichte im Rahmen der vorliegenden Erfindung üblicherweise mittels GPC bestimmt, wobei in der Regel Polystyrolstandards benutzt werden.

Erfindungsgemäß geeignete thermoplastische Polymere (P) weisen üblicherweise eine Schmelztemperatur oder einen Erweichungspunkt auf, die über der Einsatztemperatur liegt. Erfindungsgemäß geeignete thermoplastische Polymere (P) weisen üblicherweise eine Schmelztemperatur von größer 25 °C auf, insbesondere von größer 60 °C, besonders bevorzugt von größer 80 °C. Die Schmelztemperatur wird üblicherweise mittels DSC bestimmt.

Erfindungsgemäß geeignete thermoplastische Polymere (P) können nach allen dem Fachmann bekannten üblichen Polymerisationsverfiahren hergestellt werden. Geeignet sind beispielsweise radikalische oder anionische Polymerisationsverfahren.

In einer bevorzugten Ausführungsform ist das wenigstens eine thermoplastische Polymer (P) ausgewählt aus der Gruppe bestehend aus Polystyrol, substituiertem Polystyrol, beispielsweise alkylsubstituiertes Polystyrol, Poly(styrol-co-acrylnitril), Polyacrylat, Polymethacrylat, Polyolefinen, beispielsweise Polyethylen, Polypropylen, Polybutadien, Polyvinylchlorid, Polyacrylnitril, Polyestern, beispielsweise Polyethylenterephthalat, Polyamiden, beispielsweise Nylon, bei Raumtemperatur festen Polyethern wie Polyethylenglykol mit hohem Molekulargewicht oder Polytetramethylenoxid mit hohem Molekulargewicht, Copolymeren enthaltend wenigstens eines der in den vorgenannten Polymeren vorliegenden Monomeren, beispielsweise Copolymere aus Styrol und Acrylaten, Styrol und Acrylnitril oder Styrol und Ethylen, und Mischungen davon.

Insbesondere bevorzugt sind als thermoplastisches Polymer (P) Polystyrol und andere Polyolefine, Polyester und Polyamide.

Erfindungsgemäß bevorzugt ist es, als thermoplastisches Polymer (P) Recyclingmaterialien einzusetzen, d.h. Polymere, die aus einem Recycling-Prozess stammen. Derartige Recycling-Polymere können beispielsweise Polyethylen oder Polyethylenterephthalat sein.

Daher betrifft die vorliegende Erfindung gemäß einer weiteren Ausführungsform auch eine wie zuvor beschriebene Dispersion, wobei der mindestens eine schmelzbare Feststoff Polyethylen oder recyceltes Polyethylenterephthalat ist.

Der Vorteil besteht hier vor allem im niedrigen Preis des schmelzbaren Feststoffs bzw. Recydingkunststoffs, der auf diese Art in einer hochwertigen Anwendung eingesetzt werden kann.

Das in der erfindungsgemäßen Dispersion vorliegende Copolymer (C) wirkt in der erfindungsgemäßen Dispersion als Emulgator, der es ermöglicht, den wenigstens einen schmelzbaren Feststoff in dem wenigstens einen flüssigen Polymer vollständig und stabil zu dispergieren. Dazu ist es erfindungsgemäß notwendig, dass das wenigstens eine Copolymer (C) mindestens einen zu dem wenigstens einen schmelzbaren Feststoff kompatiblen Block und einen zu dem wenigstens einen flüssigen Polymer kompatiblen Block aufweist.

Erfindungsgemäß werden als Copolymere (C) Copolymere eingesetzt, die aus wenigstens einem α,β-ethylenisch ungesättigten Monomer und wenigstens einem polymerisierbaren Polymer aus der Klasse der flüssigen Polymere ausgewählt aus der Gruppe bestehend aus Polyolen, die auf einem ungesättigten Starteralkohol basieren, oder durch Umsetzung der Polyole mit ungesättigten Säuren oder Estern oder Isocyanaten erhalten werden, polymeren Isocyanaten, die durch Umsetzung von NCO-terminierten polymeren Isocyanaten mit Hydroxyalkoylacrylaten oder -methacrylaten erhalten werden, Polyurethan-Präpolymeren, die durch Umsetzung NCO-terminierten Polyurethan-Präpolymeren mit Hydroxyalkoylacrylaten oder -methacrylaten erhalten werden, Poly(meth)acrylaten, die durch Umsetzung von Poly(meth)acrylaten mit ungesättigten Alkoholen erhalten werden, Polyisobuten, das durch Umsetzung von PIBSA (Polyisobuten-Bernsteinsäure-Anhydrid) mit ungesättigten Alkoholen erhalten wird, und Mischungen davon, aufgebaut sind.

In einer bevorzugten Ausführungsform entspricht das wenigstens eine α,β-ethylenisch ungesättigte Monomer der allgemeinen Formel (I) 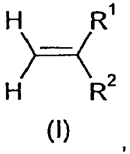 worin
worin
- R¹: C₁₋C₃₀-Alkyl, C₂-C₃₀-Alkenyl, C₂-C₃₀-Alkinyl, C₁-C₃₀-Heteroalkyl, substituiertes oder unsubstituiertes C₅-C₃₀-Aryl, substituiertes oder unsubstituiertes C₅-C₃₀-Heteroaryl oder funktionelle Gruppe ausgewählt aus -(C=O)-O-R³ oder -(C=O)-NH-R⁴ mit R³ und R⁴ ausgewählt aus H, C₁-C₃₀-Alkyl, C₂-C₃₀)-Alkenyl, C₂-C₃₀-Alkinyl, C₁-C₃₀-Heteroalkyl, substituiertem oder unsubstituiertem C₅-C₃₀-Aryl, substituiertem oder unsubstituiertem C₅-C₃₀-Heteroaryl und
- R²: H, C₁-C₃₀-Alkyl, C₂-C₃₀-Alkenyl, C₂-C₃₀-Alkinyl, C₁-C₃₀-Heteroalkyl, substituiertes oder unsubstituiertes C₅-C₃₀-Aryl oder substituiertes oder unsubstituiertes C₅-C₃₀-Heteroaryl
bedeuten.

Bevorzugt bedeuten in der allgemeinen Formel (I)
- R¹: substituiertes oder unsubstituiertes C₅-C₃₀-Aryl, beispielsweise Benzyl oder Naphthyl, substituiertes oder unsubstituiertes C₅-C₃₀-Heteroaryl oder funktionelle Gruppe ausgewählt aus -(C=O)-O-R³ oder -(C=O)-NH-R⁴ mit R³ und R⁴ ausgewählt aus C₁-C₃₀-Alkyl, insbesonders C₁₂-C₃₀Alkyl, oder C₂-C₃₀-Alkenyl, insbesonders C₁₂₋C₃₀-Alkenyl und
- R²: H, C₁-C₁₂-Alkyl, beispielsweise Methyl, Ethyl, Propyl, Butyl.
Heteroatome sind beispielsweise ausgewählt aus N, O, P, S.

In einer ganz besonders bevorzugten Ausführungsform ist das α,β-ethylenisch ungesättigte Monomer ausgewählt aus der Gruppe bestehend aus Styrol, α-Methylstyrol, Acrylnitril, Acrylaten, Acrylsäureestern oder Methacrylsäureestern oder Acrylsäureamiden oder Methacrylsäureamiden von gesättigten Fettalkoholen oder -aminen, beispielsweise Derivaten der Laurinsäure C₁₁H₂₃COOH, Tridecansäure C₁₂H₂₅COOH, Myristinsäure C₁₃H₂₇COOH, Pentadecansäure C₁₄H₂₉COOH, Palmitinsäure C₁₅H₃₁COOH, Margarinsäure C₁₆H₃₃COOH, Stearinsäure C₁₇H₃₅COOH, Nonadecansäure C₁₈H₃₇COOH, Arachinsäure C₁₉H₃₉COOH, Behensäure C₂₁H₄₃COOH, Lignicerinsäure C₂₃H₄₇COOH, Cerotinsäure C₂₅H₅₁COOH, Melissinsäure C₂₉H₅₉COOH, Tubercolostearinsäure i-C₁₈H₃₇COOH, oder ungesättigten Fettalkoholen oder -aminen, beispielsweise Derivaten der, Palmitoleinsäure C₁₅H₂₉COOH, Ölsäure C₁₇H₃₃COOH, Erucasäure C₂₁H₄₁COOH, Linolsäure C₁₇H₃₁COOH, Linolensäure C₁₇H₂₉COOH, Elaeostearinsäure C₁₇H₂₉COOH, Arachidonsäure C₁₉H₃₁COOH, Clupanodonsäure C₂₁H₃₃COOH, Docosahexaensäure C₂₁H₃₁COOH, und Mischungen davon.

In einer bevorzugten Ausführungsform liegen in dem wenigstens einen Copolymer (C) ein oder zwei, bevorzugt zwei verschiedene, ungesättigte Monomere der allgemeinen Formel (I) vor.

Erfindungsgemäß sind die Copolymere (C) aufgebaut aus wenigstens einem α,β-ethylenisch ungesättigten Monomer, wie oben beschrieben und wenigstens einem polymerisierbaren Polymer aus der Klasse der flüssigen Polymere ausgewählt aus der Gruppe bestehend aus Polyolen, die auf einem ungesättigten Starteralkohol basieren, oder durch Umsetzung der Polyole mit ungesättigten Säuren oder Estern oder Isocyanaten erhalten werden, polymeren Isocyanaten, die durch Umsetzung von NCO-terminierten polymeren Isocyanaten mit Hydroxyalkoylacrylaten oder -methacrylaten erhalten werden, Polyurethan-Präpolymeren, die durch Umsetzung NCO-terminierten Polyurethan-Präpolymeren mit Hydroxyalkoylacrylaten oder -methacrylaten erhalten werden, Poly(meth)acrylaten, die durch Umsetzung von Poly(meth)acrylaten mit ungesättigten Alkoholen erhalten werden, Polyisobuten, das durch Umsetzung von PIBSA (Polyisobuten-Bernsteinsäure-Anhydrid) mit ungesättigten Alkoholen erhalten wird, und Mischungen davon.

Mit α,β-ungesättigten Monomeren können copolymerisierbare Polyole erhalten werden, indem bei der Herstellung der Polyole ungesättigte Starteralkohole eingesetzt werden, beispielsweise lsoprenol, Allylalkohol, Hydroxybutylvinylether, Hydroxyalkyl(meth)-acrylate wie z.B. Hydroxyethylacrylat, Hydroxyisoporopylacrylat, Hydroxyethylmethacrylat, Hydroxyisopropylmethacrylat, Hydroxybutylacrylat. Geeignete copolymerisierbare Polyole könne auch durch Umsetzung der Polyole mit ungesättigten Säuren oder Estern, beilspielsweise (Meth)acrylsäure, (Meth)acrylsäureestern, oder Isocyanaten erhalten werden.

Mit α,β-ungesättigten Monomeren copolymerisierbare polymere Isocyanate können beispielsweise hergestellt werden, indem NCO-terminierte polymere Isocyanate mit Hydroxyalkylacrylaten oder -methacrylaten umgesetzt werden.

Mit α,β-ungesättigten Monomeren copolymerisierbare Polyurethan-Präpolymere können beispielsweise hergestellt werden, indem NCO-terminierte Polyurethan-Präpolymere mit Hydroxyalkylacrylaten oder -methacrylaten umgesetzt werden.

Mit α,β-ungesättigten Monomeren copolymerisierbare Poly(meth)acrylate können beispielsweise hergestellt werden, indem Poly(meth)acrylate mit ungesättigten Alkoholen, beispielsweise Allylalkohol, Isoprenol, Hydroxybutylvinylether, oder andere Hydroxyalkyl(meth)acrylate umgeestert werden.

Mit α,β-ungesättigten Monomeren copolymerisierbares Polyisobuten kann beispielsweise hergestellt werden, indem PIBSA (Polyisobuten-Bernsteinsäure-Anhydrid) mit ungesättigten Alkoholen, beispielsweise Allylakohol, Isoprenol, Hydroxybutylvinylether, oder andere Hydroxyalky(meth)acrylate geöffnet wird, um die entsprechenden Ester zu erhalten.

Das wenigstens eine in dem Copolymer (C) vorliegende polymerisierbaren Polymer aus der Klasse der flüssigen Polymere ausgewählt aus der Gruppe bestehend aus Polyolen, die auf einem ungesättigten Starteralkohol basieren, oder durch Umsetzung der Polyole mit ungesättigten Säuren oder Estern oder Isocyanaten erhalten werden, polymeren Isocyanaten, die durch Umsetzung von NCO-terminierten polymeren Isocyanaten mit Hydroxyalkoylacrylaten oder -methacrylaten erhalten werden, Polyurethan-Präpolymeren, die durch Umsetzung NCO-terminierten Polyurethan-Präpolymeren mit Hydroxyalkoylacrylaten oder -methacrylaten erhalten werden, Poly(meth)acrylaten, die durch Umsetzung von Poly(meth)acrylaten mit ungesättigten Alkoholen erhalten werden, Polyisobuten, das durch Umsetzung von PIBSA (Polyisobuten-Bernsteinsäure-Anhydrid) mit ungesättigten Alkoholen erhalten wird, und Mischungen davon, ist in einer besonders bevorzugten Ausführungsform ein ungesättigtes Polyetherpolyol, d.h., ein Polyadditionsprodukt von wenigstens einem mehrwertigen Alkohol, beispielsweise Zuckern, Glycerin, Trimethylolpropan oder einem mehrwertigen Amin, beispielsweise Toluoldiamin, wenigstens einem Alkylenoxid, beispielsweise Ethylenoxid, Propylenoxid, Butylenoxid und/oder Pentylenoxid und wenigstens einem ungesättigten Monomeren, beispielsweise mit wenigstens einer isocyanatgruppe substituiertes Styrol oder α-Methylstyrol, insbesondere Meta-isopropenylbenzylisocyanat, beispielsweise Acrylsäure, Acrylsäurechlorid, Metacrylsäure, Metacrylsäurechlorid, Fumarsäure, Maleinsäureanhydrid, vinylisch ungesättigte Epoxide wie zum Beispiel Acryloylglycidylether, Metacryloylglycidylether.

Ganz besonders bevorzugte Copolymere (C) sind beispielsweise Copolymere aus Butylacrylat, Styrol, einem ungesättigten Polyetherpolyol aus Sorbitol, Propylenoxid, Ethylenoxid und meta-Isopropenylbenzylisocyanat (Massenverhältnis 1:1:1), Copolymere aus Butylacrylat, Styrol, einem ungesättigten Polyetherpolyol aus Sorbitol, Propylenoxid, Ethylenoxid und meta-Isopropenylbenzylisocyanat (Massenverhältnis 1:2:1), Copolymere aus Butylacrylat, Styrol, einem ungesättigten Polyetherpolyol aus Sorbitol, Propylenoxid, Ethylenoxid und meta-Isopropenylbenzylisocyanat (Massenverhältnis 2:2:1), Copolymere aus Butylacrylat, Styrol, einem ungesättigten Polyetherpolyol aus Sorbitol, Propylenoxid, Ethylenoxid und meta-Isopropenylbenzylisocyanat (Massenverhältnis 4:4:1), Copolymere aus Butylacrylat, Styrol, einem ungesättigten Polyetherpolyol aus Sorbitol, Propylenoxid, Ethylenoxid und meta-Isopropenylbenzylisocyanat (Massenverhältnis 4:4:1), Copolymere aus Butylacrylat, Styrol, einem ungesättigten Polyetherpolyol aus Sorbitol, Propylenoxid, Ethylenoxid und meta-Isopropenylbenzylisocyanat (Massenverhältnis 4:4:1) mit niedrigerem Molekulargewicht, Copolymere aus Styrol, einem ungesättigten Polyetherpolyol aus Sorbitol, Propylenoxid, Ethylenoxid und meta-Isopropenylbenzylisocyanat (Massenverhältnis 8:1) Copolymere aus Butylacrylat, Styrol, einem ungesättigten Polyetherpolyol aus Sorbitol, Propylenoxid, Ethylenoxid und meta-Isopropenylbenzylisocyanat (Massenverhältnis 8:8:1) mit niedrigerem Molekulargewicht, Copolymere aus Styrol, Stearylacrylat, einem ungesättigten Polyetherpolyol aus Sorbitol, Propylenoxid, Ethylenoxid und meta-Isopropenylbenzylisocyanat (Massenverhältnis 1:1:1), Copolymere aus Stearylacrylat, einem ungesättigten Polyetherpolyol aus Sorbitol, Propylenoxid, Ethylenoxid und meta-Isopropenylbenzylisocyanat (Massenverhältnis 1:1:1), Copolymere aus Butylacrylat, Stearylacrylat, einem ungesättigten Polyetherpolyol aus Sorbitol, Propylenoxid, Ethylenoxid und meta-Isopropenylbenzylisocyanat (Massenverhältnis 1:1:1), Copolymere aus Stearylacrylat, Hydroxyethylacrylat, einem ungesättigtem Polyetherpolyol aus Hydroxyethylacrylat, Diisocyanat und Polyetherpolyol, Copolymere aus Stearylacrylat, Hydroxypropylacrylat, einem ungesättigtem Polyetherpolyol aus Hydroxyethylacrylat, Diisocyanat und Polyetherpolyol, Copolymere aus Stearylacrylat, Styrol und einem ungesättigtem Polyetherpolyol aus Hydroxyethylacrylat, Diisocyanat und Polyetherpolyol, Copolymere aus Stearylacrylat, Acrylnitril und einem ungesättigtem Polyetherpolyol aus Hydroxyethylacrylat, Diisocyanat und Polyetherpolyol, Copolymere aus ungesättigtem Fettalkohol (C₁₂-C₃₀) aus Fettalkohol (C₁₂-C₃₀) und meta-Isopropenylbenzylisocyanat, einem ungesättigtem Polyetherpolyol aus Hydroxyethylacrylat, Diisocyanat und Polyetherpolyol, Copolymere aus ungesättigtem Fettalkohol (C₁₂-C₃₀) aus Fettalkohol (C₁₂-C₃₀) und meta-Isopropenylbenzylisocyanat, Styrol, einem ungesättigtem Polyetherpolyol aus Hydroxyethylacrylat, Diisocyanat und Polyetherpolyol, Copolymere aus ungesättigtem Fettalkohol (C₁₂-C₃₀) aus Fettalkohol (C₁₂-C₃₀) und meta-Isopropenylbenzylisocyanat, Acrylnitril, einem ungesättigtem Polyetherpolyol aus Hydroxyethylacrylat, Diisocyanat und Polyetherpolyol, Copolymere aus ungesättigtem Fettalkohol (C₁₂-C₃₀) aus Fettalkohol (C₁₂-C₃₀) und meta-Isopropenylbenzylisocyanat, einem ungesättigtem Polyetherpolyol aus meta-Isopropenylbenzylisocyanat und Polyetherpolyol, Copolymere aus ungesättigtem Fettalkohol (C₁₂-C₃₀) aus Fettalkohol (C₁₂-C₃₀) und meta-Isopropenylbenzylisocyanat, Styrol, einem ungesättigtem Polyetherpolyol aus meta-Isopropenylbenzylisocyanat und Polyetherpolyol.

Diese erfindungsgemäß als Copolymere (C) geeigneten Polymere weisen vorzugsweise ein Molekulargewicht im Bereich von 1000 bis 10000000 g/mol, insbesondere von 5000 bis 5000000, insbesondere von 10000 bis 2000000 g/mol auf. Üblicherweise werden die Molekulargewichte mittels GPC bestimmt.

Der Anteil des Copolymers (C) beträgt üblicherweise 0,1 bis 20 Gew.-%, vorzugsweise 0,2 bis 10 Gew.-%, insbesondere 0,5 bis 5 Gew.-%, bezogen auf das Gesamtgewicht des eingesetzten schmelzbaren Feststoffes.

In einer bevorzugten Ausführungsform liegt in der erfindungsgemäßen Dispersion zusätzlich oder alternativ zum Copolymer wenigstens ein Emulgator vor.

Die erfindungsgemäß eingesetzten Emulgatoren sind dadurch charakterisiert, dass ein mindestens Teil des Moleküls eine Affinität zur Dispersphase, also dem schmelzbaren Feststoff, und mindestens ein Teil eine Affinität zur kontinuierlichen Phase, also dem flüssigen Polymer, aufweist.

Erfindungsgemäß eigenen sich alle dem Fachmann bekannten Emulgatoren, wobei auch Gemische aus zwei oder mehreren Emulgatoren eingesetzt werden können.

Als Emulgatoren eignen sich im Rahmen der vorliegenden Erfindung beispielsweise Sulfonsäurederivate, beispielsweise Natriumsalze eines Naphtalinsulfonsäure-Formaldehyd-Kondensationsproduktes mit ca. 1-2% Natriumsulfat oder Natriumsalze eines Naphtalinsulfonsäure-Formaldehyd-Kondensationsproduktes mit ca. 3-8% Natriumsulfat;
Propylenoxid-Ethylenoxid-Copolymere, beispielsweise Propylenoxid-Ethylenoxid-Copolymere mit 10% Ethylenoxid (EO) und einem Molekulargewicht (Mw) von etwa 1000g/mol, Propylenoxid-Ethylenoxid-Copolymere mit 10% EO und einem Molekulargewicht (Mw) von etwa 2000g/mol, Propylenoxid-Ethylenoxid-Copolymere mit 40% EO und einem Molekulargewicht (Mw) von etwa 2900g/mol, Propylenoxid-Ethylenoxid-Copolymere mit 80% EO und einem Molekulargewicht (Mw) von etwa 8000g/mol, Propylenoxid-Ethylenoxid-Copolymere mit 10% EO und einem Molekulargewicht (Mw) von etwa 2600g/mol, Propylenoxid-Ethylenoxid-Copolymere mit 40% EO und einem Molekulargewicht (Mw) von etwa 4600g/mol, Propylenoxid-Ethylenoxid-Copolymere mit 10% EO und einem Molekulargewicht (Mw) von etwa 3500g/mol, Propylenoxid-Ethylenoxid-Copolymere mit 50% EO und einem Molekulargewicht (Mw) von etwa 6500g/mol, Propylenoxid-Ethylenoxid-Copolymere mit 20% EO und einem Molekulargewicht (Mw) von etwa 2150g/mol, Propylenoxid-Ethylenoxid-Copolymere mit 35% EO und einem Molekulargewicht (Mw) von etwa 4100g/mol, Propylenoxid-Ethylenoxid-Copolymere mit 20% EO und einem Molekulargewicht (Mw) von etwa 3100g/mol, Propylenoxid-Ethylenoxid-Copolymere mit 10% EO und einem Molekulargewicht (Mw) von etwa 3500g/mol;
alkoxylierte Fettalkohole, alkoxyliertes Glycerin, Ölsäure-Ethoxylate, ethoxylierte Fettalkohole, beispielsweise ethoxyliertes Rizinusöl, ethoxylierte C₁₆C₁₈Fettalkohole mit 11 EO-Einheiten, ethoxylierte C₁₆C₁₈Fettalkohole mit 25 EO-Einheiten, ethoxylierte C₁₆C₁₈Fettalkohole mit 50 EO-Einheiten, ethoxylierte C₁₆C₁₈Fettalkohole mit 80 EO-Einheiten, ethoxylierte C₁₃C₁₅Oxoalkohole mit 5 EO-Einheiten, ethoxylierte C₁₃C₁₅Oxoalkohole mit 8 EO-Einheiten, ethoxylierte C₁₃C₁₅Oxoalkohole mit 30 EO-Einheiten, ethoxylierte C₁₃Oxoalkohole mit 5 EO-Einheiten, ethoxylierte C₁₃Oxoalkohole mit 8 EO-Einheiten, ethoxylierte C₁₃Oxoalkohole mit 12 EO-Einheiten, ethoxylierte C₁₃Oxoalkohole mit 20 EO-Einheiten, ethoxylierte C₁₃Oxoalkohole mit 30 EO-Einheiten, ethoxylierte C₁₃Oxoalkohole mit 40 EO-Einheiten, ethoxyliertes Tridecanol N mit 15 EO-Einheiten, ethoxyliertes Tridecanol N mit 22 EO-Einheiten, ethoxylierte Ölsäureamide mit 10 EO-Einheiten, ethoxylierte Oleylamine mit 12 EO-Einheiten endcapped alkoxylierte Fettalkohole, Mischungen aus Glycerin-Monooleat und Propylenglykol, Mischungen der Teilester von Stearyl- und Palmitinsäure mit ethoxyliertem Glycerin, insbesondere mit 20 EO-Einheiten pro Glycerin, Trigylcerin-Monooleat, Dekaglycerin-Tetratoleat;
Ester aus Dodecansäure und Polyethylenglykol 200, Ester aus Dodecansäure und Polyethylenglykol 400, Ester aus Tallölfettsäure und Polyethylenglykol 400, Monoester aus Dodecansäure und Polyethylenglykol 400, Monoester aus Ölsäure und Polyethylenglykol 400, Monoester aus Tallölfettsäure und Polyethylenglykol 400, Ester aus Tallölfettsäure und Polyethylenglykol 600, Ester aus Dodecansäure und Polyethylenglykol 600, Ester aus Stearylsäure und Polyethylenglykol 600, Monoester aus Stearylsäure und Polyethylenglykol 600, Ester aus Stearylsäure und Polyethylenglykol 6000, Diester aus Polyoxyalkylenglykol und Ölsäure, Ester aus Laurylsulfat, Stearylsulfat und Polyethylenglykol;
Sorbit-Derivate, beispielsweise Sorbit-Monooleate, Sorbit-Monostearate, Sorbit-Tristearate, Sorbit-Trioleate, Sorbit-Monotallate, ethoxylierte Sorbit-Monolaurate, ethoxylierte Sorbit-Monooctadecanoate, ethoxylierte Sorbit-Trisoctadecanoate, Polysorbite, Polysorbit-Monooleate, Polysorbit-Trisoctadecanoate, Polysorbit-Monotallate ;
Polyglycerinbehenate, Silikon-Polyetherole;
Polycarbonatpolyole, beispielsweise ein Polycarbonatpolyol, erhältlich aus einem Polyetherpolyol aus Trimethylolpropan und Ethylenoxid, Octadecenol, Diethylcarbonat im Verhältnis (0,75:0,25) : 1 mit einem Molekulargewicht Mw von etwa 5400 g/mol, ein Polycarbonatpolyol, erhältlich aus einem Polyetherpolyol aus Trimethylolpropan und Ethylenoxid, Octadecenol, Diethylcarbonat im Verhältnis (0,5:0,5) : 1, mit einem Molekulargewicht Mn: 1200, Mw: 2800 g/mol, ein Polycarbonatpolyol, erhältlich aus einem Polyetherpolyol aus Trimethylolpropan und Ethylenoxid, Dodecanol, Diethylcarbonat im Verhältnis (0,9:0,1:1), mit einem Molekulargewicht Mn: 5400, Mw: 38600 g/mol, ein Polycarbonatpolyol, erhältlich aus einem Polyetherpolyol aus Trimethylolpropan und Ethylenoxid, Octadecanol, Dimethylcarbonat im Verhältnis (0,7:0,3:1), mit einem Molekulargewicht Mn: 1940, Mw: 40000 g/mol, ein Polycarbonatpolyol, erhältlich aus einem Polyetherpolyol aus Trimethylolpropan und Ethylenoxid, Diethylcarbonat, Lutensol TO3 im Verhältnis (1,0: 0,8: 0,2), mit einem Molekulargewicht Mn: 1340, Mw: 4850 g/mol, ein Polycarbonatpolyol, erhältlich aus einem Polyetherpolyol aus Trimethylolpropan und Ethylenoxid, Diethylcarbonat, Oleylalkohol im Verhältnis (1,0: 0,8: 0,2), mit einem Molekulargewicht Mn: 1650, Mw: 6100 g/mol, ein Polycarbonatpolyol, erhältlich aus einem Polyetherpolyol aus Trimethylolpropan und Ethylenoxid, Diethylcarbonat, Oleylalkohol im Verhältnis (1,0: 0,8: 0,2), mit einem Molekulargewicht Mn: 1970, Mw: 12400 g/mol, ein Polycarbonatpolyol, erhältlich aus einem Polyetherpolyol aus Trimethylolpropan und Ethylenoxid, Diethylcarbonat, Oleylalkohol im Verhältnis (1,0: 0,67: 0,17), mit einem Molekulargewicht Mn: 2440, Mw: 21600 g/mol, ein Polycarbonatpolyol, erhältlich aus einem Polyetherpolyol aus Trimethylpropan und Propylenoxid, Diethylcarbonat, Oleylalkohol im Verhältnis (1,0: 0,9: 0,1), mit einem Molekulargewicht Mn: 920, Mw: 1950 g/mol, ein Polycarbonatpolyol, erhältlich aus einem Polyetherpolyol aus Trimethylpropan und Propylenoxid, Diethylcarbonat, Oleylalkohol im Verhältnis (1,2: 0,8: 0,2), mit einem Molekulargewicht Mn: 1610, Mw: 4300 g/mol, ein Polycarbonatpolyol, erhältlich aus einem Polyetherpolyol aus Trimethylpropan und Propylenoxid, Diethylcarbonat, einem ethoxyliertem Alkyl-Oxoalkohol im Verhältnis (1,0: 0,8: 0,2), mit einem Molekulargewicht Mn: 1420, Mw: 4830 g/mol, ein Polycarbonatpolyol, erhältlich aus Lupranol 1301, Diethylcarbonat, Oleylalkohol (1,0: 0,8: 0,2), mit einem Molekulargewicht Mn: 1650, Mw: 7200 g/mol, ein Polycarbonatpolyol, erhältlich aus einem Polyetherpolyol aus Trimethylolpropan und Propylenoxid, Diethylcarbonat, Oleylalkohol (1,0: 0,7: 0,3), mit einem Molekulargewicht Mn: 1060, Mw: 7370 g/mol, ein Polycarbonatpolyol, erhältlich aus einem Polyetherpolyol aus Trimethylpropan und Propylenoxid, Diethylcarbonat, Oleylalkohol (1,0: 0,6: 0,4), mit einem Molekulargewicht Mn: 610, Mw: 2870 g/mol, ein Polycarbonatpolyol, erhältlich aus Lupranol 1301, Diethylcarbonat, Oleylalkohol (1,0: 0,85: 0,15), mit einem Molekulargewicht Mn: 510, Mw: 3850 g/mol, ein Polycarbonatpolyol, erhältlich aus einem Polyetherpolyol aus Trimethylpropan und Propylenoxid, Diethylcarbonat, Oleylalkohol (1,0: 0,85: 0,15), mit einem Molekulargewicht Mn: 3650, Mw: 15100 g/mol, ein Polycarbonatpolyol, erhältlich aus einem Polyetherpolyol aus Trimethylpropan und Propylenoxid, Diethylcarbonat, Oleylalkohol (1,0: 0,6: 0,4), mit einem Molekulargewicht Mn: 1100, Mw: 7300 g/mol, ein Polycarbonatpolyol, erhältlich aus einem Polyetherpolyol aus Trimethylpropan und Propylenoxid, Diethylcarbonat, Stearylisocyanat (100% Umsatz), ein Polycarbonatpolyol, erhältlich aus einem Polyetherpolyol aus Trimethylpropan und Propylenoxid, Diethylcarbonat, Stearylisocyanat (30% Umsatz);
Ester, beispielsweise Ester aus Polyetherpolyol aus Trimethylolpropan und Ethylenoxid und Polyisobutensuccinanhydrid, Ester aus Polyisobutensuccinanhydrid , Polyetherol aus Glycerin, Propylenoxid und Ethylenoxid, Ester aus Polyisobutensuccinanhydrid, Polyetherol aus Toluylendiamin, Propylenoxid und Ethylenoxid Isocyanatpräpolymere, beispielsweise Isocyanatpräpolymere aus Toluylendiisocyanat, Polyetherpolyol aus Trimethylolpropan und Ethylenoxid, Oleylamin.

Geeignete Emulgatoren sind beispielsweise unter den folgenden Handelsnamen erhältlich: Tamol® NN 2901, Tamol ® NN 8906, Pluronic® PE 3100, Pluronic® PE 6100, Pluronic® PE 6400, Pluronic® PE 6800, Pluronic® PE 8100, Pluronic® PE 9400, Pluronic® PE10100, Pluronic® PE 10500, Pluronic® RPE 1720, Pluronic® RPE 2035, Pluronic® RPE 2520, Pluronic® RPE 3110, Degressal® SD 20, Degressal® SD 21, Degressal® SD 22, Degressal® SD 23, Degressal® SD 61, Emulan® A, Emulan® OG, Emulan® ELP, Emulan® EL, Emulan® ELH 60, Lutensol® AT 11, Lutensol® AT 25, Lutensol® AT 50, Lutensol® AT 80, Lutensol® AO 5, Lutensol® AO 8, Lutensol® AO 30, Lutensol® TO 5, Lutensol® TO 8, Lutensol® TO 12, Lutensol® TO 20, Lutensol® TO 30, Lutensol® TO 40, Lutensol® FSA 10, Lutensol® FA 12, Plurafac® LF 120, Plurafac® LF 131, Plurafac® LF 132, Plurafac® LF 223, Plurafac® LF 224, Plurafac® LF 226, Plurafac® LF 231, Plurafac® LF 303, Plurafac® LF 400, Plurafac® LF 401, Plurafac® LF 403, Plurafac® LF 407, Plurafac® LF 431, Plurafac® LF 500, Plurafac® LF 600, Plurafac® LF 711, Plurafac® LF 1300, Plurafac® LF1430, Mazol® 159, Mazol® 300K, Mazol® 80 MGK, Mazol® GMOK, Mazol® GMSK, Mazol® PGO 31 K, Mazol® PGO 104K, Mazol® GMSD K, Mapeg® 200 ML, Mapeg® 400 DO, Mapeg® 400 DOT, Mapeg® 400 ML, Mapeg® 400 MO, Mapeg® 400 MOT, Mapeg® 600 DOT, Mapeg® 600 DO, Mapeg® 600 DS, Mapeg® 600 MS, Mapeg® 6000 DS, Mapeg® L61 Dioleate, Mapeg® S40 K, S-Maz® 20, S-Maz® 60, S-Maz® 65, S-Maz® 80, S-Maz® 85, S-Maz® 90, T-Maz® 20, T-Maz® 21, T-Maz® 28, T-Maz® 60, T-Maz® 65 , T-Maz® 80, T-Maz® 81, T-Maz® 85, T-Maz® 90, PGB®, DABCO® DC5103, DABCO® DC193, Niax Silicon, Tegostab B8423, Tegostab B8433, TDNx15EO, TDNx22EO.

Der Anteil des optional vorliegenden Emulgators beträgt im Rahmen der vorliegenden Erfindung üblicherweise 0,1 bis 20 Gew.-%, vorzugsweise 0,2 bis 10 Gew.-%, insbesondere 0,5 bis 5 Gew.-%, bezogen auf das Gesamtgewicht des eingesetzten schmelzbaren Feststoffs.

Sofern optional ein Gemisch aus zwei oder mehr Emulgatoren eingesetzt wird, beträgt im Rahmen der vorliegenden Erfindung die Summe der Emulgatoren vorzugsweise 0,1 bis 20 Gew.-%, vorzugsweise 0,2 bis 10 Gew.-%, insbesondere 0,5 bis 5 Gew.-%, bezogen auf das Gesamtgewicht des eingesetzten schmelzbaren Feststoffs.

Die benötigte Menge des Emulgators bzw. des Copolymers ist abhängig von dem gewünschten mittleren Teilchendurchmesser des Polymerpartikelgemisches, dem gewünschten Feststoffgehalt und vom Molekulargewicht des eingesetzten Emulgators bzw. Copolymers (C). Je größer der gewünschte Teilchendurchmesser ist oder je geringer der gewünschte Feststoffgehalt ist, desto weniger Emulgator bzw. Copolymer wird erfindungsgemäß eingesetzt.

Beispielsweise enthält die erfindungsgemäße Dispersion den schmelzbaren Feststoff in einer Menge von 2,0 bis 70,0 Gew.-%, vorzugsweise von 5,0 bis 60,0 Gew.-%, weiter bevorzugt von 15,0 bis 45,0 Gew.-%, jeweils bezogen auf die gesamte Dispersion. Die erfindungsgemäße Dispersion enthält üblicherweise den mindestens ein Copolymer (C) in einer Menge von 0,1 bis 20,0 Gew.-%, bevorzugt von 1,0-10,0 Gew.-%, besonders bevorzugt von 2,0 bis 7,5 Gew.-%, jeweils bezogen auf die gesamte Dispersion. Die erfindungsgemäße Dispersion enthält weiterhin das mindestens eine flüssige Polymer, insbesondere das mindestens eine Polyol, in einer Menge von 15,0 bis 94,9 Gew.-%, insbesondere von 30,0 bis 88,0 Gew.-%, besonders bevorzugt von 47,5 bis 83,0 Gew.-%, jeweils bezogen auf die gesamte Dispersion.

Der Gesamtfeststoffgehalt der erfindungsgemäßen Polyoldispersionen kann in weiten Bereichen variieren, beispielsweise von 1 bis 80 Gew.-%. Die erfindungsgemäßen Polyoldispersionen weisen beispielsweise einen Gesamtfeststoffgehalt von 5 bis 65 Gew.-%, vorteilhafterweise von 10 bis 50 Gew.-%, auf.

Im Rahmen der vorliegenden Erfindung ist der Feststoffgehalt der Dispersionen als das prozentuale Verhältnis des Polymerpartikelgemisches zu dem eingesetzten flüssigen Polymer zu verstehen. Der Feststoffgehalt kann beispielsweise gravimetrisch aus dem prozentualen Verhältnis der Feststoffmasse zur Gesamtmasse der Dispersion bestimmt werden.

Daher betrifft die vorliegende Erfindung gemäß einer weiteren Ausführungsform auch eine wie zuvor beschriebene Dispersion, wobei die Dispersion einen Feststoffgehalt von 5 bis 65 Gew.-% aufweist.

Erfindungsgemäß weisen die in der erfindungsgemäßen Dispersion enthaltenen Partikel einen maximalen Durchmesser Dmax von kleiner als 100 µm auf, bevorzugt kleiner als 20 µm, insbesondere kleiner als 10 µm, bestimmt mittels dynamischer Lichtstreuung, Fraunhofer-Beugung und/oder Laserdiffraktometrie gemäß der in WO 03/078496 offenbarten Methode.

Erfindungsgemäß weist das in der Dispersion bzw. Polyoldispersion enthaltene Partikel- bzw. Polymerpartikelgemisch bevorzugt einen mittleren Teilchendurchmesser von 0,01 bis 20,0 µm auf. Besonders bevorzugt beträgt der mittlere Teilchendurchmesser 0,05 bis 10,0 µm, insbesondere 0,1 bis 5,0 µm, ganz besonders bevorzugt 0,5 bis 3,0 µm, beispielsweise 0,7 bis 2,0 µm.

Erfindungsgemäß kann die Teilchengrößenverteilung monomodal, bimodal oder multimodal sein.

Erfindungsgemäß kann die Dispersion weitere Feststoffe oder andere Zusatzstoffe enthalten, solange der Feststoffgehalt in den oben angegebenen Bereichen liegt.

Erfindungsgemäß ist es auch möglich, dass die Polyoldispersion zusätzlich ein Graftpolyol enthält. Dies kann beispielsweise einer erfindungsgemäßen Polyoldispersion zugegeben werden.

Die vorliegende Erfindung betrifft auch ein Verfahren (V) zur Herstellung einer erfindungsgemäßen Dispersion, umfassend die Schritte
(A) Erwärmen einer Mischung (I) enthaltend wenigstens einen schmelzbaren Feststoff, wenigstens ein bei 25°C und 1013mbar flüssiges Polymer und wenigstens ein Copolymer (C), wobei das wenigstens eine Copolymer (C) ein statistisches Copolymer ist aufgebaut aus wenigstens einem α,β-ethylenisch ungesättigten Monomeren und wenigstens einem polymerisierbaren Polymer aus der Klasse der flüssigen Polymere ausgewählt aus der Gruppe bestehend aus Polyolen, die auf einem ungesättigten Starteralkohol basieren, oder durch Umsetzung der Polyole mit ungesättigten Säuren oder Estern oder Isocyanaten erhalten werden, polymeren Isocyanaten, die durch Umsetzung von NCO-terminierten polymeren Isocyanaten mit Hydroxyalkoylacrylaten oder -methacrylaten erhalten werden, Polyurethan-Präpolymeren, die durch Umsetzung NCO-terminierten Polyurethan-Präpolymeren mit Hydroxyalkoylacrylaten oder -methacrylaten erhalten werden, Poly(meth)acrylaten, die durch Umsetzung von Poly(meth)acrylaten mit ungesättigten Alkoholen erhalten werden, Polyisobuten, das durch Umsetzung von PIBSA (Polyisobuten-Bernsteinsäure-Anhydrid) mit ungesättigten Alkoholen erhalten wird, und Mischungen davon, unter Erhalt einer Mischung (II) und
(C) Abkühlen der Mischung (II).

Das erfindungsgemäße Verfahren erlaubt die preiswerte Herstellung von Dispersionen, insbesondere Polyoldispersionen, auf einfache Weise. Bezüglich der flüssigen Polymere, bevorzugt der Polyole, der Copolymere (C), des schmelzbaren Feststoffe, insbesondere der thermoplastischen Polymere (P), der Mengen der einzelnen Komponenten und der bevorzugten Ausführungsformen gilt das bezüglich der erfindungsgemäßen Dispersionen Gesagte. Zusätzlich können auch die genannten Emulgatoren und/oder Copolymere (C') eingesetzt werden.

Bevorzugt wird in Schritt (A) des erfindungsgemäßen Verfahrens die Mischung (I) bis auf eine Temperatur erwärmt, bei der der eingesetzte schmelzbare Feststoff, bevorzugt das eingesetzte thermoplastische Polymer (P), schmilzt und nicht zersetzt wird. Vorzugsweise werden die übrigen eingesetzten Komponenten bei der gewählten Temperatur nicht zersetzt.

Erfindungsgemäß wird beim Erwärmen der Zusammensetzung gemäß Schritt (A) der schmelzbare Feststoff aufgeschmolzen. Dabei bildet sich erfindungsgemäß eine Emulsion, wobei das wenigstens eine Copolymer (C) und gegebenenfalls wenigstens ein zusätzlicher Emulgator vorzugsweise überwiegend an der Grenzfläche von schmelzbarem Feststoff und Polyol angeordnet sind. Vorzugsweise ist im Rahmen der vorliegenden Erfindung Mischung (II) eine Emulsion.

Die Temperatur für Schritt (A) liegt im Allgemeinen mindestens 10 °C, bevorzugt mindestens 30 °C und besonders bevorzugt mindestens 50°C über dem Schmelzpunkt des eingesetzten schmelzbaren Feststoffes bzw. über der Schmelz- oder Erweichungstemperatur des eingesetzten thermoplastischen Polymers (P).

Beim Abkühlen der Mischung (II) erstarren oder kristallisieren erfindungsgemäß die Tröpfchen, wobei sich ein Partikelgemisch umfassend mindestens einen schmelzbaren Festsoff, wenigstens ein Copolymer (C) und gegebenenfalls einen zusätzlichen Emulgator bildet.

Erfindungsgemäß erfolgt in Schritt (A) neben der Erwärmung der Mischung (I) ein Durchmischen, so dass der wenigstens eine schmelzbare Festsoff in geschmolzenem Zustand in der Mischung (I) vorzugsweise in Form von fein verteilten Tropfen vorliegt.

Die erfindungsgemäße Einarbeitung des wenigstens einen schmelzbaren Feststoffes findet bevorzugt bei höheren Temperaturen durch starke Durchmischung, vorzugsweise durch Rühren, unter Zugabe des wenigstens einen Copolymers (C) und gegebenenfalls eines zusätzlichen Emulgators statt. Dabei bildet sich vorzugsweise zunächst eine Emulsion von geschmolzenen Tröpfchen im flüssigen Polymer. Die Tropfengröße kann durch die eingetragene Rührenergie und die zugesetzte Art und Menge des Copolymers (C) bzw. des Emulgators kontrolliert werden.

Durch Abkühlen der Emulsion festigen sich die Tropfen, wobei die zu dem wenigstens einen schmelzbaren Feststoff kompatiblen Bereiche des wenigstens einen Copolymers (C) sich an der Grenzfläche des schmelzbaren Feststoffs zum flüssigen Polymer anreichern und so eine Stabilisierung der erhaltenen Dispersion bewirken können.

Erfindungsgemäß ist es möglich, die Zusammensetzung umfassend den wenigstens einen schmelzbaren Feststoff und das wenigstens eine flüssige Polymer über den Schmelzpunkt oder Schmelzbereich des schmelzbaren Feststoffes hinaus zu erhitzen. Dieser Prozessschritt kann zum Beispiel in einem Rührkessel erfolgen. Es ist auch möglich, den zunächst als Feststoff vorliegenden wenigstens einen schmelzbaren Feststoff separat auf zu schmelzen, z.B. in einem Extruder, Kneter oder einer anderen geeigneten Apparatur und ihn anschließend, beispielsweise mit Hilfe von Pumpen mit dem wenigstens einen flüssigen Polymer zusammen zu führen. In beiden Fällen kann sowohl die kontinuierliche Phase wie auch die disperse Phase mit den entsprechend für die Formulierung und die spätere Anwendung erforderlichen Hilfsstoffen, wie Tensiden oder weiteren Emulgatoren, versetzt sein. Es ist erfindungsgemäß auch möglich, diese Prozesse in Druckapparaturen durchzuführen, da der Dampfdruck der kontinuierlichen Phase durch die Temperaturerhöhung ansteigen und auch oberhalb des Umgebungsdruckes liegen kann. Sobald die kontinuierliche Phase und die den aufgeschmolzenen Feststoff enthaltende disperse Phase miteinander vereinigt sind, wird die Zusammensetzung im Rahmen der vorliegenden Erfindung auch als Rohemulsion bezeichnet.

Die Rohemulsion kann dann in einer Emulgierapparatur behandelt werden, wobei die Tropfen fein zerkleinert werden (sog. Feinemulgierung). Der Prozessschritt des Feinemulgierens kann diskontinuierlich, beispielsweise in einem Rührbehälter, oder kontinuierlich durchgeführt werden. Kontinuierlich arbeitende Maschinen und Apparaturen zur Emulgierung sind dem Fachmann bekannt und sind zum Beispiel Kolloidmühlen, Zahnkranzdispergiermaschinen und andere Bauformen dynamischer Mischer, weiterhin Hochdruckhomogenisatoren, Pumpen mit nachgeschalteten Düsen, Ventilen, Membranen oder sonstigen engen Spaltgeometrien, statische Mischer, Mikromischsysteme sowie Ultraschall-Emulgiersysteme. Bevorzugt werden Zahnkranzdispergiermaschinen oder Hochdruckhomogenisatoren eingesetzt.

Nach dem Feinemulgieren kann die Feinemulsion unter den Schmelzpunkt oder Schmelzbereich des schmelzbaren Feststoffes abgekühlt werden. Dabei erstarrt der Feststoff in der Dispersphase in partikulärer Form. Während oder nach der Feinemulgierung können der Formulierung weitere optionale Hilfsstoffe, wie Tenside, weitere Emulgatoren oder Schutzkolloide, zugesetzt werden.

Vor, während oder nach dem erfindungsgemäßen Verfahren zur Herstellung der Dispersionen können optional weitere Formulierungshilfmittel zugesetzt werden. Der Begriff Formulierungshilfsmittel beschreibt Tenside, Antischäumungsmittel, Verdicker, weitere Emulgatoren, Schutzkolloide. Bei den für Polyurethananwendungen bestimmten Polyoldispersionen können noch Antioxidationsmittel oder Stabilisatoren hinzugesetzt werden.

Geeignete Verfahren zum Schmelzemulgieren werden beispielsweise beschrieben in Schultz S., Wagner G., Urban K., Ulrich J., Chem. Eng. Technol. 2004, 27, No. 4, 361-368, "High-pressure homogenization as a process for emulsion formation", in Urban K., Wagner G., Schaffner D., Röglin D., Ulrich J., Chem. Eng. Technol. 2006, 29, No. 1, 24-31, "Rotor-stator and disc systems for emulsification processes" und in EP 1 008 380 B 1.

Erfindungsgemäß werden Schritt (A) oder Schritt (C) oder Schritt (A) und Schritt (C) des erfindungsgemäßen Verfahrens unter Rühren durchgeführt.

In einer bevorzugten Ausführungsform des erfindungsgemäßen Verfahrens findet in Schritt (C) keine Scherung statt. Im Rahmen der vorliegenden Erfindung bedeutet "keine Scherung", dass kein Energieeintrag erfolgt, der die Stabilität der Dispersion verändert. D.h., es erfolgt kein Energieeintrag, während dessen eine zusätzliche Dispergierung, zusätzliche Koaleszenz oder zusätzliche Agglomeration des dispergierten schmelzbaren Feststoffes messbar ist.

Daher betrifft die vorliegende Erfindung gemäß einer weiteren Ausführungsform auch ein wie zuvor beschriebenes Verfahren zur Herstellung einer Dispersion, wobei Schritt (A) des Verfahrens unter Rühren durchgeführt wird.

Erfindungsgemäß muss dabei die Temperatur bei Schritt (A) über der Schmelztemperatur des wenigstens einen schmelzbaren Feststoffes, insbesondere des thermoplastischen Polymers (P), liegen.

Erfindungsgemäß ist es auch möglich, dass das Erwärmen gemäß Schritt (A) in einem Extruder durchgeführt wird, bevorzugt in einem Zweischneckenextruder.

Für einzelne Anwendungen kann es vorteilhaft sein, wenn die Partikel eine enge Teilchendurchmesserverteilung aufweisen. Insbesondere kann es vorteilhaft sein, dass die Dispersion keine großen Teilchen enthält, d.h., Teilchen mit einem Durchmesser von größer 10 µm, die zu Störungen beim Verarbeiten, wie beispielsweise zum Verstopfen von Filtern, Sieben oder Düsen, führen können. Deshalb wird die gemäß dem erfindungsgemäßen Verfahren erhaltene Dispersion gemäß einer Ausführungsform nach dem Abkühlen gemäß Schritt (C) durch eine ein- oder mehrstufige Filtration gereinigt. In einer bevorzugten Ausführungsform weist das erfindungsgemäße Verfahren nach Schritt (A) und vor Schritt (C) den folgenden Schritt (B) auf:

### (B) Dispergierung der Mischung (II).

Verfahren, um die erfindungsgemäße Mischung (II) zu dispergieren sind dem Fachmann bekannt, beispielsweise Rotor-Stator-Systeme beispielsweise beschrieben in US 2630274 A, DE 19720959 A1 oder Urban, K. et al, Chem. Eng. Technology, 2006, 29, No.1, Seite 24-31, bzw. Ultraschallemulgieren beispielsweise beschrieben in DE 19756874 A1, bzw. Membranemulgieren beispielsweise beschrieben in US 7452470 B2, bzw. Hochdrucksysteme beispielsweise beschrieben in DE 19856604 A1, DE 10207011205 A1 oder Schultz, S. et al, Chem. Eng. Technol. 2004, 27, No. 4, Seite 361-368.

Somit betrifft die vorliegende Erfindung in einer bevorzugten Ausführungsform das erfindungsgemäße Verfahren, wobei es nach Schritt (A) und vor Schritt (C) den folgenden Schritt (B) aufweist:

### (B) Dispergierung der Mischung (II).

Als flüssige Polymere sind für das erfindungsgemäße Verfahren die oben genannten Polymere, insbesondere die zuvor genannten Polyole, geeignet. Daher betrifft die vorliegende Erfindung gemäß einer weiteren Ausführungsform auch ein wie zuvor beschriebenes Verfahren zur Herstellung einer Polyoldispersion, wobei das mindestens eine Polyol ausgewählt ist aus der Gruppe bestehend aus Polyetherolen, Polyesterolen und Mischungen davon.

Als schmelzbarer Feststoff sind für das erfindungsgemäße Verfahren insbesondere die zuvor genannten thermoplastischen Polymere (P) geeignet. Daher betrifft die vorliegende Erfindung gemäß einer weiteren Ausführungsform auch ein wie zuvor beschriebenes Verfahren zur Herstellung einer Dispersion, insbesondere einer Polyoldispersion, wobei das mindestens eine thermoplastisches Polymer (P) ausgewählt ist aus der Gruppe bestehend aus Polystyrol, Polyethylen und Polyethylenterephthalat.

Erfindungsgemäß werden Copolymer (C) und schmelzbarer Feststoff, insbesondere thermoplastisches Polymer (P), in Mengen eingesetzt, die dem gewünschten Verhältnis im Partikelgemisch entsprechen.

Daher betrifft die vorliegende Erfindung gemäß einer weiteren Ausführungsform auch ein wie zuvor beschriebenes Verfahren zur Herstellung einer Dispersion , insbesondere einer Polyoldispersion, wobei das wenigstens eine Copolymer (C) in einer Menge von 0,1 bis 10 Gew.-%, bezogen auf das Gesamtgewicht des eingesetzten wenigstens einen schmelzbaren Feststoffes, insbesondere des thermoplastischen Polymers (P), eingesetzt wird.

Die vorliegende Erfindung betrifft des Weiteren auch ein Verfahren (V') zur Herstellung einer erfindungsgemäßen Dispersion, umfassend die Schritte:
(A') Erwärmen einer Mischung (I') enthaltend wenigstens einen schmelzbaren Feststoff, wenigstens ein bei 25°C und 1013 mbar flüssiges Polymer und wenigstens ein Copolymer (C') unter Erhalt einer Mischung (II'),
(B) Dispergierung der Mischung (II') und
(C) Abkühlen der Mischung (II') mit einer Kühlrate von wenigstens 10 K/min.

Schritt (A') dieses erfindungsgemäßen Verfahrens (V') entspricht im Prinzip Schritt (A) des erstgenannten erfindungsgemäßen Verfahrens (V), mit dem Unterschied, dass die Mischung (I') neben wenigstens einem flüssigen Polymer und wenigstens einem schmelzbaren Feststoff, wenigstens ein Copolymer (C') und/oder einen Emulgator enthält. Bezüglich der schmelzbaren Feststoffe und der flüssigen Polymere gilt das oben Gesagte.

Erfindungsgemäß kann in Schritt (A') ein Emulgator vorliegen.

Beispielsweise eignen sich im Rahmen der vorliegenden Erfindung als Emulgatoren handelsübliche Emulgatoren, insbesondere alkoxylierte Fettalkohole.

Als Emulgatoren eignen sich im Rahmen der vorliegenden Erfindung des Weiteren beispielsweise Sulfonsäurederivate, beispielsweise Natriumsalze eines Naphtalinsulfonsäure-Formaldehyd-Kondensationsproduktes mit ca. 1-2% Natriumsulfat oder Natriumsalze eines Naphtalinsulfonsäure-Formaldehyd-Kondensationsproduktes mit ca. 3-8% Natriumsulfat;

Propylenoxid-Ethylenoxid-Copolymere, beispielsweise Propylenoxid-Ethylenoxid-Copolymere mit 10% Ethylenoxid (EO) und einem Molekulargewicht (Mw) von etwa 1000g/mol, Propylenoxid-Ethylenoxid-Copolymere mit 10% EO und einem Molekulargewicht (Mw) von etwa 2000g/mol, Propylenoxid-Ethylenoxid-Copolymere mit 40% EO und einem Molekulargewicht (Mw) von etwa 2900g/mol, Propylenoxid-Ethylenoxid-Copolymere mit 80% EO und einem Molekulargewicht (Mw) von etwa 8000g/mol, Propylenoxid-Ethylenoxid-Copolymere mit 10% EO und einem Molekulargewicht (Mw) von etwa 2600g/mol, Propylenoxid-Ethylenoxid-Copolymere mit 40% EO und einem Moiekuiargewicht (Mw) von etwa 4600g/mol, Propylenoxid-Ethylenoxid-Copolymere mit 10% EO und einem Molekulargewicht (Mw) von etwa 3500g/mol, Propylenoxid-Ethylenoxid-Copolymere mit 50% EO und einem Molekulargewicht (Mw) von etwa 6500g/mol, Propylenoxid-Ethylenoxid-Copolymere mit 20% EO und einem Molekulargewicht (Mw) von etwa 2150g/mol, Propylenoxid-Ethylenoxid-Copolymere mit 35% EO und einem Molekulargewicht (Mw) von etwa 4100g/mol, Propylenoxid-Ethylenoxid-Copolymere mit 20% EO und einem Molekulargewicht (Mw) von etwa 3100g/mol, Propylenoxid-Ethylenoxid-Copolymere mit 10% EO und einem Molekulargewicht (Mw) von etwa 3500g/mol;
alkoxylierte Fettalkohole, alkoxyliertes Glycerin, Ölsäure-Ethoxylate, ethoxylierte Fettalkohole, beispielsweise ethoxyliertes Rizinusöl, ethoxylierte C₁₆C₁₈Fettalkohole mit 11 EO-Einheiten, ethoxylierte C₁₆C₁₈Fettalkohole mit 25 EO-Einheiten, ethoxylierte C₁₆C₁₈Fettalkohole mit 50 EO-Einheiten, ethoxylierte C₁₆C₁₈Fettalkohole mit 80 EO-Einheiten, ethoxylierte C₁₃C₁₅Oxoalkohole mit 5 EO-Einheiten, ethoxylierte C₁₃C₁₅Oxoalkohole mit 8 EO-Einheiten, ethoxylierte C₁₃C₁₅Oxoalkohole mit 30 EO-Einheiten, ethoxylierte C₁₃Oxoalkohole mit 5 EO-Einheiten, ethoxylierte C₁₃Oxoalkohole mit 8 EO-Einheiten, ethoxylierte C₁₃Oxoalkohole mit 12 EO-Einheiten, ethoxylierte C₁₃Oxoalkohole mit 20 EO-Einheiten, ethoxylierte C₁₃Oxoalkohole mit 30 EO-Einheiten, ethoxylierte C₁₃Oxoalkohole mit 40 EO-Einheiten, ethoxyliertes Tridecanol N mit 15 EO-Einheiten, ethoxyliertes Tridecanol N mit 22 EO-Einheiten, ethoxylierte Ölsäureamide mit 10 EO-Einheiten, ethoxylierte Oleylamine mit 12 EO-Einheiten endcapped alkoxylierte Fettalkohole, Mischungen aus Glycerin-Monooleat und Propylenglykol, Mischungen der Teilester von Stearyl- und Palmitinsäure mit ethoxyliertem Glycerin, insbesondere mit 20 EO-Einheiten pro Glycerin, Trigylcerin-Monooleat, Dekaglycerin-Tetratoleat;
Ester aus Dodecansäure und Polyethylenglykol 200, Ester aus Dodecansäure und Polyethylenglykol 400, Ester aus Tallölfettsäure und Polyethylenglykol 400, Monoester aus Dodecansäure und Polyethylenglykol 400, Monoester aus Ölsäure und Polyethylenglykol 400, Monoester aus Tallölfettsäure und Polyethylenglykol 400, Ester aus Tallölfettsäure und Polyethylenglykol 600, Ester aus Dodecansäure und Polyethylenglykol 600, Ester aus Stearylsäure und Polyethylenglykol 600, Monoester aus Stearylsäure und Polyethylenglykol 600, Ester aus Stearylsäure und Polyethylenglykol 6000, Diester aus Polyoxyalkylenglykol und Ölsäure, Ester aus Laurylsulfat, Stearylsulfat und Polyethylenglykol;
Sorbit-Derivate, beispielsweise Sorbit-Monooleate, Sorbit-Monostearate, Sorbit-Tristearate, Sorbit-Trioleate, Sorbit-Monotallate, ethoxylierte Sorbit-Monolaurate, ethoxylierte Sorbit-Monooctadecanoate, ethoxylierte Sorbit-Trisoctadecanoate, Polysorbite, Polysorbit-Monooleate, Polysorbit-Trisoctadecanoate, Polysorbit-Monotallate ;
Polyglycerinbehenate, Silikon-Polyetherole;
Polycarbonatpolyole, beispielsweise ein Polycarbonatpolyol, erhältlich aus einem Polyetherpolyol aus Trimethylolpropan und Ethylenoxid, Octadecenol, Diethylcarbonat im Verhältnis (0,75:0,25) : 1 mit einem Molekulargewicht Mw von etwa 5400 g/mol, ein Polycarbonatpolyol, erhältlich aus einem Polyetherpolyol aus Trimethylolpropan und Ethylenoxid, Octadecenol, Diethylcarbonat im Verhältnis (0,5:0,5) : 1, mit einem Molekulargewicht Mn: 1200, Mw: 2800 g/mol, ein Polycarbonatpolyol, erhältlich aus einem Polyetherpolyol aus Trimethylolpropan und Ethylenoxid, Dodecanol, Diethylcarbonat im Verhältnis (0,9:0,1:1), mit einem Molekulargewicht Mn: 5400, Mw: 38600 g/mol, ein Polycarbonatpolyol, erhältlich aus einem Polyetherpolyol aus Trimethylolpropan und Ethylenoxid, Octadecanol, Dimethylcarbonat im Verhältnis (0,7:0,3:1), mit einem Molekulargewicht Mn: 1940, Mw: 40000 g/mol, ein Polycarbonatpolyol, erhältlich aus einem Polyetherpolyol aus Trimethylolpropan und Ethylenoxid, Diethylcarbonat, Lutensol TO3 im Verhältnis (1,0: 0,8: 0,2), mit einem Molekulargewicht Mn: 1340, Mw: 4850 g/mol, ein Polycarbonatpolyol, erhältlich aus einem Polyetherpolyol aus Trimethylolpropan und Ethylenoxid, Diethylcarbonat, Oleylalkohol im Verhältnis (1,0: 0,8: 0,2), mit einem Molekulargewicht Mn: 1650, Mw: 6100 g/mol, ein Polycarbonatpolyol, erhältlich aus einem Polyetherpolyol aus Trimethylolpropan und Ethylenoxid, Diethylcarbonat, Oleylalkohol im Verhältnis (1,0: 0,8: 0,2), mit einem Molekulargewicht Mn: 1970, Mw: 12400 g/mol, ein Polycarbonatpolyol, erhältlich aus einem Polyetherpolyol aus Trimethylolpropan und Ethylenoxid, Diethylcarbonat, Oleylalkohol im Verhältnis (1,0: 0,67: 0,17), mit einem Molekulargewicht Mn: 2440, Mw: 21600 g/mol, ein Polycarbonatpolyol, erhältlich aus einem Polyetherpolyol aus Trimethylpropan und Propylenoxid, Diethylcarbonat, Oleylalkohol im Verhältnis (1,0: 0,9: 0,1), mit einem Molekulargewicht Mn: 920, Mw: 1950 g/mol, ein Polycarbonatpolyol, erhältlich aus einem Polyetherpolyol aus Trimethylpropan und Propylenoxid, Diethylcarbonat, Oleylalkohol im Verhältnis (1,2: 0,8: 0,2), mit einem Molekulargewicht Mn: 1610, Mw: 4300 g/mol, ein Polycarbonatpolyol, erhältlich aus einem Polyetherpolyol aus Trimethylpropan und Propylenoxid, Diethylcarbonat, einem ethoxyliertem Alkyl-Oxoalkohol im Verhältnis (1,0: 0,8: 0,2), mit einem Molekulargewicht Mn: 1420, Mw: 4830 g/mol, ein Polycarbonatpolyol, erhältlich aus Lupranol 1301, Diethylcarbonat, Oleylalkohol (1,0: 0,8: 0,2), mit einem Molekulargewicht Mn: 1650, Mw: 7200 g/mol, ein Polycarbonatpolyol, erhältlich aus einem Polyetherpolyol aus Trimethylolpropan und Propylenoxid, Diethylcarbonat, Oleylalkohol (1,0: 0,7: 0,3), mit einem Molekulargewicht Mn: 1060, Mw: 7370 g/mol, ein Polycarbonatpolyol, erhältlich aus einem Polyetherpolyol aus Trimethylpropan und Propylenoxid, Diethylcarbonat, Oleylalkohol (1,0: 0,6: 0,4), mit einem Molekulargewicht Mn: 610, Mw: 2870 g/mol, ein Polycarbonatpolyol, erhältlich aus Lupranol 1301, Diethylcarbonat, Oleylalkohol (1,0: 0,85: 0,15), mit einem Molekulargewicht Mn: 510, Mw: 3850 g/mol, ein Polycarbonatpolyol, erhältlich aus einem Polyetherpolyol aus Trimethylpropan und Propylenoxid, Diethylcarbonat, Oleylalkohol (1,0: 0,85: 0,15), mit einem Molekulargewicht Mn: 3650, Mw: 15100 g/mol, ein Polycarbonatpolyol, erhältlich aus einem Polyetherpolyol aus Trimethylpropan und Propylenoxid, Diethylcarbonat, Oleylalkohol (1,0: 0,6: 0,4), mit einem Molekulargewicht Mn: 1100, Mw: 7300 g/mol, ein Polycarbonatpolyol, erhältlich aus einem Polyetherpolyol aus Trimethylpropan und Propylenoxid, Diethylcarbonat, Stearylisocyanat (100% Umsatz), ein Polycarbonatpolyol, erhältlich aus einem Polyetherpolyol aus Trimethylpropan und Propylenoxid, Diethylcarbonat, Stearylisocyanat (30% Umsatz);
Ester, beispielsweise Ester aus Polyetherpolyol aus Trimethylolpropan und Ethylenoxid und Polyisobutensuccinanhydrid, Ester aus Polyisobutensuccinanhydrid, Polyetherol aus Glycerin, Propylenoxid und Ethylenoxid, Ester aus Polyisobutensuccinanhydrid, Polyetherol aus Toluylendiamin, Propylenoxid und Ethylenoxid Isocyanatpräpolymere, beispielsweise Isocyanatpräpolymere aus Toluylendiisocyanat, Polyetherpolyol aus Trimethylolpropan und Ethylenoxid, Oleylamin.

Als Copolymere (C') sind beispielsweise geeignet:
Copolymere aus Butylacrylat, Styrol, einem ungesättigten Polyetherpolyol aus Sorbitol, Propylenoxid, Ethylenoxid und meta-Isopropenylbenzylisocyanat (Massenverhältnis 1:1:1), Copolymere aus Butylacrylat, Styrol, einem ungesättigten Polyetherpolyol aus Sorbitol, Propylenoxid, Ethylenoxid und meta-Isopropenylbenzylisocyanat (Massenverhältnis 1:2:1), Copolymere aus Butylacrylat, Styrol, einem ungesättigten Polyetherpolyol aus Sorbitol, Propylenoxid, Ethylenoxid und meta-Isopropenylbenzylisocyanat (Massenverhältnis 2:2:1), Copolymere aus Butylacrylat, Styrol, einem ungesättigten Polyetherpolyol aus Sorbitol, Propylenoxid, Ethylenoxid und meta-Isopropenylbenzylisocyanat (Massenverhältnis 4:4:1), Copolymere aus Butylacrylat, Styrol, einem ungesättigten Polyetherpolyol aus Sorbitol, Propylenoxid, Ethylenoxid und meta-Isopropenylbenzylisocyanat (Massenverhältnis 4:4:1), Copolymere aus Butylacrylat, Styrol, einem ungesättigten Polyetherpolyol aus Sorbitol, Propylenoxid, Ethylenoxid und meta-Isopropenylbenzylisocyanat (Massenverhältnis 4:4:1) mit niedrigerem Molekulargewicht, Copolymere aus Styrol, einem ungesättigten Polyetherpolyol aus Sorbitol, Propylenoxid, Ethylenoxid und meta-Isopropenylbenzylisocyanat (Massenverhältnis 8:1) Copolymere aus Butylacrylat, Styrol, einem ungesättigten Polyetherpolyol aus Sorbitol, Propylenoxid, Ethylenoxid und meta-Isopropenylbenzylisocyanat (Massenverhältnis 8:8:1) mit niedrigerem Molekulargewicht, Copolymere aus Styrol, Stearylacrylat, einem ungesättigten Polyetherpolyol aus Sorbitol, Propylenoxid, Ethylenoxid und meta-Isopropenylbenzylisocyanat (Massenverhältnis 1:1:1), Copolymere aus Stearylacrylat, einem ungesättigten Polyetherpolyol aus Sorbitol, Propylenoxid, Ethylenoxid und meta-Isopropenylbenzylisocyanat (Massenverhältnis 1:1:1), Copolymere aus Butylacrylat, Stearylacrylat, einem ungesättigten Polyetherpolyol aus Sorbitol, Propylenoxid, Ethylenoxid und meta-Isopropenylbenzylisocyanat (Massenverhältnis 1:1:1), Copolymere aus Stearylacrylat, Hydroxyethylacrylat, einem ungesättigtem Polyetherpolyol aus Hydroxyethylacrylat, Diisocyanat und Polyetherpolyol, Copolymere aus Stearylacrylat, Hydroxyethylacrylat, einem ungesättigtem Polyetherpolyol aus Hydroxyethylacrylat, Diisocyanat und Polyetherpolyol, Copolymere aus Stearylacrylat, Hydroxypropylacrylat, einem ungesättigtem Polyetherpolyol aus Hydroxyethylacrylat, Diisocyanat und Polyetherpolyol, Copolymere aus Stearylacrylat, Styrol und einem ungesättigtem Polyetherpolyol aus Hydroxyethylacrylat, Diisocyanat und Polyetherpolyol, Copolymere aus Stearylacrylat, Acrylnitril und einem ungesättigtem Polyetherpolyol aus Hydroxyethylacrylat, Diisocyanat und Polyetherpolyol, Copolymere aus ungesättigtem Fettalkohol (C₁₂-C₃₀) aus Fettalkohol (C₁₂-C₃₀) und meta-Isopropenylbenzylisocyanat, einem ungesättigtem Polyetherpolyol aus Hydroxyethylacrylat, Diisocyanat und Polyetherpolyol, Copolymere aus ungesättigtem Fettalkohol (C₁₂-C₃₀) aus Fettalkohol (C₁₂-C₃₀) und meta-Isopropenylbenzylisocyanat, Styrol, einem ungesättigtem Polyetherpolyol aus Hydroxyethylacrylat, Diisocyanat und Polyetherpolyol, Copolymere aus ungesättigtem Fettalkohol (C₁₂-C₃₀) aus Fettalkohol (C₁₂-C₃₀) und meta-Isopropenylbenzylisocyanat, Acrylnitril, einem ungesättigtem Polyetherpolyol aus Hydroxyethylacrylat, Diisocyanat und Polyetherpolyol, Copolymere aus ungesättigtem Fettalkohol (C₁₂-C₃₀) aus Fettalkohol (C₁₂-C₃₀) und meta-Isopropenylbenzylisocyanat, einem ungesättigtem Polyetherpolyol aus meta-Isopropenylbenzylisocyanat und Polyetherpolyol, Copolymere aus ungesättigtem Fettalkohol (C₁₂-C₃₀) aus Fettalkohol (C₁₂-C₃₀) und meta-Isopropenylbenzylisocyanat, Styrol, einem ungesättigtem Polyetherpolyol aus meta-Isopropenylbenzylisocyanat und Polyetherpolyol.

Das Copolymer (C') kann nach allen üblichen, dem Fachmann bekannten Verfahren hergestellt werden. Geeignete Verfahren sind beispielsweise in "Anionic synthesis of well-defined poly[(styrene)-block-(propylene oxide) block copolymers"; R. P. Quirk, G. M. Lizarraga; Macrom. Chem. a. Phys., 2001, 1395 - 1404 beschrieben.

Erfindungsgemäß geeignete Copolymere weisen vorzugsweise ein Molekulargewicht im Bereich von 3000 bis 30000 g/mol, insbesondere von 6000 bis 15000 g/mol auf. Üblicherweise werden die Molekulargewichte mittels GPC bestimmt.

Geeignete Emulgatoren/Copolymere (C') sind beispielsweise unter den folgenden Handelsnamen erhältlich: Tamol® NN 2901, Tamol ® NN 8906, Pluronic® PE 3100, Pluronic® PE 6100, Pluronic® PE 6400, Pluronic® PE 6800, Pluronic® PE 8100, Pluronic® PE 9400, Pluronic® PE10100, Pluronic® PE 10500, Pluronic® RPE 1720, Pluronic® RPE 2035, Pluronic® RPE 2520, Pluronic® RPE 3110, Degressal® SD 20, Degressal® SD 21, Degressal® SD 22, Degressal® SD 23, Degressal® SD 61, Emulan® A, Emulan® OG, Emulan® ELP, Emulan® EL, Emulan® ELH 60, Lutensol® AT 11,

Lutensol® AT 25, Lutensol® AT 50, Lutensol® AT 80, Lutensol® AO 5, Lutensol® AO 8, Lutensol® AO 30, Lutensol® TO 5, Lutensol® TO 8, Lutensol® TO 12, Lutensol® TO 20, Lutensol® TO 30, Lutensol® TO 40, Lutensol® FSA 10, Lutensol® FA 12, Plurafac® LF 120, Plurafac® LF 131, Plurafac® LF 132, Plurafac® LF 223, Plurafac® LF 224, Plurafac® LF 226, Plurafac® LF 231, Plurafac® LF 303, Plurafac® LF 400, Plurafac® LF 401, Plurafac® LF 403, Plurafac® LF 407, Plurafac® LF 431, Plurafac® LF 500, Plurafac® LF 600, Plurafac® LF 711, Plurafac® LF 1300, Plurafac® LF1430, Mazol® 159, Mazol® 300K, Mazol® 80 MGK, Mazol® GMOK, Mazol® GMSK, Mazol® PGO 31 K, Mazol® PGO 104K, Mazol® GMSD K, Mapeg® 200 ML, Mapeg® 400 DO, Mapeg® 400 DOT, Mapeg® 400 ML, Mapeg® 400 MO, Mapeg® 400 MOT, Mapeg® 600 DOT, Mapeg® 600 DO, Mapeg® 600 DS, Mapeg® 600 MS, Mapeg® 6000 DS, Mapeg® L61 Dioleate, Mapeg® S40 K, S-Maz® 20, S-Maz® 60, S-Maz® 65, S-Maz® 80, S-Maz® 85, S-Maz® 90, T-Maz® 20, T-Maz® 21, T-Maz® 28, T-Maz® 60, T-Maz® 65 , T-Maz® 80, T-Maz® 81, T-Maz® 85, T-Maz® 90, PGB®, DABCO® DC5103, DABCO® DC193, Niax Silicon, Tegostab B8423, Tegostab B8433, TDNx15EO, TDNx22EO.

Erfindungsgemäß können auch zwei oder mehr der genannten Emulgatoren/Copolymere (C') eingesetzt werden.

Der Anteil des Emulgators/Copolymers (C') beträgt im Rahmen des Verfahrens (V') gemäß der vorliegenden Erfindung üblicherweise 0,1 bis 20 Gew.-%, vorzugsweise 0,2 bis 10 Gew.-%, insbesondere 0,5 bis 3 Gew.-%, bezogen auf das Gesamtgewicht des eingesetzten schmelzbaren Feststoffs.

Sofern ein Gemisch aus zwei oder mehr Emulgatoren/Copolymeren (C') eingesetzt wird, beträgt im Rahmen des Verfahrens (V') gemäß der vorliegenden Erfindung die Summe der Emulgatoren vorzugsweise 0,1 bis 20 Gew.-%, vorzugsweise 0,2 bis 10 Gew.-%, insbesondere 0,5 bis 5 Gew.-%, bezogen auf das Gesamtgewicht des eingesetzten schmelzbaren Feststoffs.

Die benötigte Menge des Emulgators bzw. des Copolymers (C') ist abhängig von dem gewünschten mittleren Teilchendurchmesser des Partikel- bzw. Polymerpartikelgemisches, des Feststoffgehaltes und vom Molekulargewicht des eingesetzten Emulgators bzw. Copolymers (C'). Je größer der gewünschte Teilchendurchmesser ist, desto weniger Emulgator bzw. Copolymer wird erfindungsgemäß eingesetzt.

In Schritt (C) des erfindungsgemäßen Verfahrens (V') wird die in Schritt (A') erhaltene Mischung (II') mit einer Kühlrate von wenigstens 10 K/min, bevorzugt wenigstens 20 k/min, besonders bevorzugt 60 K/min, abgekühlt.

In Schritt (C) des erfindungsgemäßen Verfahrens (V') wird die in Schritt (A') erhaltene Mischung (II') mit einer Kühlrate von höchstens 2000 K/min, bevorzugt höchstens 1000 k/min, besonders bevorzugt höchstens 500 K/min, abgekühlt.

Die erfindungsgemäß sehr hohen Kühlraten in Schritt (C) des Verfahrens (V') können durch dem Fachmann bekannte Vorrichtungen erzielt werden, beispielsweise durch folgende Wärmeübertrager (WÜ) zum Abkühlen: Doppelrohr-WÜ, Platten-WÜ, Rohrbündel-WÜ, U-Rohr-WÜ (Sonderbauform des Rohrbündels), Spiral-WÜ, direkte Kühlung durch Einleiten von verdampfendem Kältemittel, nicht mischbarem Kühlmedium, kalter kontinuierlicher Phase, direkte Kühlung durch Führen des Produktstroms durch "Kältetunnel", beispielsweise Einleiten des Produktes in ein kühles Medium, z. B. ein Gas, Aufbringen auf Bandkühler, beispielsweise als dünner Film, Aufbringen auf Walzenkühler, beispielsweise als dünner Film, und Kombinationen dieser Ausführungsformen.

Durch das sehr schnelle Abkühlen in Schritt (C) des erfindungsgemäßen Verfahrens (V') ist es möglich, eine stabile und sehr homogen dispergierte Polyoldispersion zu erhalten. Somit ist es durch das erfindungsgemäße Verfahren (V') möglich, dass das Abkühlen ohne das Einbringen von Scherkräften in die Mischung (II') erfolgen kann.

In einer bevorzugten Ausführungsform des erfindungsgemäßen Verfahrens (V') findet in Schritt (C) keine Scherung statt.

Die Aufarbeitung der nach Schritt (C) vorliegenden Dispersion kann nach den bezüglich Verfahren (V) genannten Methoden erfolgen, beispielsweise Filtrieren.

Die durch die Verfahren (V) und (V') hergestellten Dispersionen bzw. Polyoldispersionen zeichnen sich aufgrund des Verfahrens zu ihrer Herstellung durch den Einsatz kostengünstiger, kommerzialisierter Emulgatoren, das Verhindern von Koaleszenz und Agglomeration aus. Daher betrifft die vorliegende Erfindung auch Dispersionen, bevorzugt Polyoldispersionen, herstellbar durch erfindungsgemäße Verfahren (V) und (V').

Die erfindungsgemäßen Dispersionen bzw. Polyoldispersionen bzw. die nach dem erfindungsgemäßen Verfahren erhältlichen Dispersionen eignen sich für verschiedene Anwendungen. Je nach Anwendungsgebiet können die erfindungsgemäßen Dispersionen bzw. Polyoldispersionen dabei weitere Hilfs- und Zusatzstoffe enthalten.

Die erfindungsgemäßen Dispersionen bzw. Polyoldispersionen bzw. die nach dem erfindungsgemäßen Verfahren erhältlichen Dispersionen können beispielsweise als Lackrohstoffe für die Automobilindustrie, beispielsweise als Reaktivverdünner oder Vernetzer eingesetzt werden. Für derartige Anwendungen eignen sich insbesondere Dispersionen, die als flüssiges Polymer polymere Isocyanate enthalten.

Die erfindungsgemäßen Dispersionen bzw. Polyoldispersionen eignen sich weiter als Dispersionsrohstoffe für Bautenanstriche, Dichtmassen, Zement, Papier, Textil, Leder, Klebrohstoffe. Für derartige Anwendungen eignen sich insbesondere Dispersionen, die als flüssiges Polymer Polyacrylate, filmbildende Polymere oder Polyurethan-Präpolymere enthalten.

Die erfindungsgemäßen Dispersionen bzw. Polyoldispersionen eignen sich weiter als Treibstoffadditive oder Dach-Beschichtungen. Für derartige Anwendungen eignen sich insbesondere Dispersionen, die als flüssiges Polymer Polyisobuten enthalten.

Die erfindungsgemäßen Polyoldispersionen bzw. die nach einem erfindungsgemäßen Verfahren erhältlichen Polyoldispersionen eignen sich insbesondere für die Herstellung von Polyurethanen.

Die vorliegende Erfindung betrifft daher auch die Verwendung einer wie zuvor beschriebene Polyoldispersion oder einer Polyoldispersion erhältlich nach einem wie zuvor beschriebenen Verfahren zur Herstellung von Polyurethanen.

Durch den Einsatz der erfindungsgemäßen Polyoldispersionen bei der Herstellung von Polyurethanen, insbesondere von Polyurethanschaumstoffen, kann das Schäumverhalten, insbesondere das Zellöffnungsverhalten, positiv beeinflusst werden. Aufgrund der dispergierten Phase, also der Feststoffe in der Polyoldispersion, kommt es zur Härteerhöhung der Polyurethanschäume im Vergleich zu Schäumen, die ohne den Zusatz der erfindungsgemäßen Polyoldispersionen hergestellt werden.

Verfahren und Einsatzstoffe für die Herstellung von Polyurethanen sind dem Fachmann grundsätzlich bekannt. Üblicherweise werden mindestens eine PolyolKomponente und mindestens ein Polyisocyanat umgesetzt.

Daher betrifft die vorliegende Erfindung auch ein Verfahren zur Herstellung eines Polyurethans, wobei mindestens eine wie zuvor beschriebene Polyoldispersion oder eine Polyoldispersion erhältlich nach einem wie zuvor beschriebenen Verfahren mit mindestens einem Polyisocyanat umgesetzt wird.

Die Herstellung der Polyurethane erfolgt erfindungsgemäß insbesondere durch Umsetzung von organischen und/oder modifizierten organischen Polyisocyanaten mit den oben beschriebenen erfindungsgemäßen Polyoldispersionen und gegebenenfalls weiteren gegenüber Isocyanaten reaktive Wasserstoffatome aufweisenden Verbindungen in Gegenwart von Katalysatoren, gegebenenfalls Wasser und/ oder anderen Treibmitteln und gegebenenfalls weiteren Hilfs- und Zusatzstoffen.

Erfindungsgemäß kann die erfindungsgemäße Polyoldispersion oder die nach einem erfindungsgemäßen Verfahren erhältliche Polyoldispersion alleine oder zusammen mit mindestens einem weiteren Polyol oder zusammen mit mindestens einem Graftpolyol oder zusammen mit mindestens einem weiteren Polyol und mindestens einem Graftpolyol eingesetzt werden.

Zu den neben den erfindungsgemäßen Polyoldispersionen verwendbaren weiteren Ausgangskomponenten ist im Einzelnen Folgendes auszuführen:
Als Polyisocyanate können erfindungsgemäß grundsätzlich alle dem Fachmann bekannten Polyisocyanate eingesetzt werden, insbesondere aliphatische, cycloaliphatische, araliphatische und vorzugsweise aromatische mehrwertige Isocyanate.

Geeignet sind beispielsweise: Alkylendiisocyanate mit 4 bis 12 Kohlenstoffatomen im Alkylenrest, wie 1,12-Dodecandiisocyanat, 2-Ethyl-tetramethylen-1,4-diisocyanat, 2-Methylpentamethylen-1,5-diisocyanat, Tetramethylen-1,4-diisocyanat und vorzugsweise Hexamethylen-1,6-diisocyanat; cycloaliphatische Diisocyanate, wie Cyclohexan-1,3-und -1,4-diisocyanat sowie beliebige Gemische dieser Isomeren, I-Isocyanato-3,3,5-trimethyl-5-isocyanatomethylcyclohexan (IPDI) , 2,4- und 2,6-Hexahydrotoluylendiisocyanat sowie die entsprechenden Isomerengemische, 4,4'-, 2,2'- und 2, 4'-Dicyclohexylmethandiisocyanat sowie die entsprechenden Isomerengemische, und vorzugsweise aromatische Di- und Polyisocyanate, wie z. B. 2,4- und 2,6-Toluylendiisocyanat und die entsprechenden Isomerengemische, 4,4'-, 2,4'- und 2,2'-Diphenylmethandiisocyanat und die entsprechenden Isomerengemische, Mischungen aus 4,4'- und 2,2'-Diphenylmethandiisocyanaten, Polyphenylpolymethylenpolyisocyanate, Mischungen aus 4,4'- , 2,4'- und 2,2'-Diphenylmethandiisocyanaten und Polyphenylpolymethylenpolyisocyanaten (Roh-MDI) und Mischungen aus Roh-MDI und Toluylendiisocyanaten.

Die organischen Di- und Polyisocyanate können einzeln oder in Form ihrer Mischungen eingesetzt werden.

Bevorzugt verwendet werden Toluylendiisocyanat, Gemische aus Diphenylmethandiisocyanat-Isomeren, Gemische aus Diphenylmethandiisocyanat und Roh-MDI oder Toluylendiisocyanat mit Diphenylmethandiisocyanat und/oder Roh-MDI. Besonders bevorzugt eingesetzt werden Gemische aus Diphenylmethandiisocyanat-Isomeren mit Anteilen an 2,4'-Diphenylmethandiisocyanat von mindestens 30 Gew.-%.

Häufig werden auch so genannte modifizierte mehrwertige Isocyanate, d. h. Produkte, die durch chemische Umsetzung organischer Di- und/oder Polyisocyanate erhalten werden, verwendet. Beispielhaft genannt seien Ester-, Harnstoff-, Biuret-, Allophanat-, Carbodiimid-, Isocyanurat-, Uretdion- und/oder Urethangruppen enthaltende Di-und/oder Polyisocyanate. Im Einzelnen kommen beispielsweise in Betracht: Urethangruppen enthaltende organische, vorzugsweise aromatische, Polyisocyanate mit NCO-Gehalten von 43 bis 15 Gew.-%, vorzugsweise von 31 bis 21 Gew.-%, bezogen auf das Gesamtgewicht, durch Umsetzung beispielsweise mit niedermolekularen Diolen, Triolen, Dialkylenglykolen, Trialkylenglykolen oder Polyoxyalkylenglykolen mit mittleren Molekulargewichten bis 6000 g/mol, insbesondere mit mittleren Molekulargewichten bis 1500 g/mol, modifiziertes 4,4'-Diphenylmethandiisocyanat, modifizierte 4,4'- und 2,4'-Diphenylmethandiisocyanatmischungen oder modifiziertes Roh-MDI oder 2, 4- bzw. 2,6-Toluylendiisocyanat. Die Di- bzw. Polyoxyalkylenglykole können dabei einzeln oder als Gemische eingesetzt werden, beispielsweise genannt seien: Diethylen-, Dipropylenglykol, Polyoxyethylen-, Polyoxypropylen- und Polyoxypropylenpolyoxyethenglykole, -triole und/oder -tetrole. Geeignet sind auch NCO-Gruppen enthaltende Prepolymere mit NCO-Gehalten von 25 bis 35 Gew.-%, vorzugsweise von 21 bis 14 Gew.-%, bezogen auf das Gesamtgewicht, hergestellt aus Polyester- und/oder vorzugsweise Polyetherpolyolen und 4,4'-Diphenylmethandiisocyanat, Mischungen aus 2,4'- und 4,4'-Diphenylmethandiisocyanat, 2,4- und/oder 2,6-Toluylendiisocyanaten oder Roh-MDI. Geeignet sind ferner flüssige, Carbodiimidgruppen und/oder Isocyanuratringe enthaltende Polyisocyanate mit NCO-Gehalten von 43 bis 15 Gew.-%, vorzugsweise 31 bis 21 Gew.-%, bezogen auf das Gesamtgewicht, z. B. auf Basis von 4,4'-, 2,4'- und/oder 2, 2'-Diphenylmethandiisocyanat und/oder 2,4- und/oder 2,6-Toluylendiisocyanat.

Die modifizierten Polyisocyanate können erfindungsgemäß auch miteinander oder mit unmodifizierten organischen Polyisocyanaten wie z. B. 2,4'-, 4,4'-Diphenylmethandiisocyanat, Roh-MDI, 2,4- und/oder 2,6-Toluylendiisocyanat gemischt werden.

Besonders geeignet als modifizierte organische Polyisocyanate sind NCOgruppenhaltige Prepolymere, die vorteilhafterweise gebildet werden aus der Reaktion der Isocyanate mit Polyolen sowie gegebenenfalls weiteren Verbindungen mit gegenüber Isocyanaten reaktiven funktionellen Gruppen.

Neben den oben beschriebenen erfindungsgemäßen Polyoldispersionen werden gegebenenfalls weitere gegenüber Isocyanaten reaktive Wasserstoffatome aufweisende Verbindungen zugegeben.

Hierfür kommen beispielsweise Verbindungen mit mindestens zwei reaktiven Wasserstoffatomen in Frage. Dabei werden zweckmäßigerweise solche mit einer Funktionalität von 2 bis 8, vorzugsweise 2 bis 3, und einem mittleren Molekulargewicht von 300 bis 8000, vorzugsweise von 300 bis 5000, verwendet. Die Hydroxylzahl der Polyhydroxylverbindungen beträgt dabei in aller Regel 20 bis 160 und vorzugsweise 28 bis 70.

Die erfindungsgemäß verwendbaren Polyhydroxyverbindungen, beispielsweise Polyetherpolyole, werden nach bekannten Verfahren hergestellt. Beispielsweise können sie durch anionische Polymerisation mit Alkalihydroxiden, wie z. B. Natrium- oder Kaliumhydroxid oder Alkalialkoholaten, wie z. B. Natriummethylat, Natrium- oder Kaliumethylat oder Kaliumisopropylat als Katalysatoren und unter Zusatz mindestens eines Startermoleküls, das 2 bis 8, vorzugsweise 2 bis 3, reaktive Wasserstoffatome aufweist, oder durch kationische Polymerisation mit Lewissäuren, wie Antimonpentachlorid, Borfluorid-Etherat u. a., oder Bleicherde als Katalysatoren hergestellt werden. Ebenso können Polyhydroxyverbindungen durch Doppelmetallcyanidkatalyse aus einem oder mehreren Alkylenoxiden mit 2 bis 4 Kohlenstoffatomen im Alkylenrest hergestellt werden. Für spezielle Einsatzzwecke können auch monofunktionelle Starter in den Polyetheraufbau eingebunden werden.

Geeignete Alkylenoxide sind beispielsweise Tetrahydrofuran, 1,3-Propylenoxid, 1,2- bzw. 2,3-Butylenoxid, Styroloxid und vorzugsweise Ethylenoxid und 1,2-Propylenoxid. Die Alkylenoxide können einzeln, alternierend nacheinander oder als Mischungen verwendet werden.

Als Startermoleküle kommen beispielsweise in Betracht: Wasser, organische Dicarbonsäuren, wie Bernsteinsäure, Adipinsäure, Phthalsäure und Terephthalsäure, aliphatische und aromatische, gegebenenfalls N-mono-, N,N- und N,N'-dialkylsubstituierte Diamine mit 1 bis 4 Kohlenstoffatomen im Alkylrest, wie gegebenenfalls mono- und dialkylsubstituiertes Ethylendiamin, Diethylentriamin, Triethylentetramin, 1,3-Propylendiamin, 1,3- bzw. 1,4-Butylendiamin, 1,2-, 1,3-, 1,4-, 1,5- und 1,6-Hexamethylendiamin, Phenylendiamin, 2,3-, 2,4- und 2,6-Toluylendiamin und 4,4'-, 2,4'- und 2,2'-Diaminodiphenylmethan. Als Startermoleküle kommen ferner in Betracht: Alkanolamine, wie z. B. Ethanolamin, N-Methyl- und N-Ethylethanolamin, Dialkanolamine, wie z. B. Diethanolamin, N-Methyl- und N-Ethyldiethanolamin, Trialkanolamine, wie z. B. Triethanolamin, und Ammoniak. Vorzugsweise verwendet werden mehrwertige, insbesondere zwei- und/oder dreiwertige Alkohole, wie Ethandiol, 1,2- und 2,3-Propandiol, Diethylenglykol, Dipropylenglykol, 1,4-Butandiol, 1,6-Hexandiol, Glycerin, Trimethylolpropan, Pentaerythrit.

Die Polyetherpolyole, vorzugsweise Polyoxypropylen- und Polyoxypropylenpolyoxyethylenpolyole, besitzen eine Funktionalität von vorzugsweise 2 bis 8 und insbesondere 2 bis 3 und mittlere Molekulargewichte von 300 bis 8000 g/mol, vorzugsweise 300 bis 6000 g/mol und insbesondere 1000 bis 5000 g/mol. Geeignete Polyoxytetramethylenglykole weisen beispielsweise ein mittleres Molekulargewicht bis ungefähr 3500 g/mol auf.

Die Polyhydroxyverbindungen, insbesondere Polyetherpolyole, können einzeln oder in Form von Mischungen verwendet werden.

Neben den beschriebenen Polyetherpolyolen können beispielsweise auch Polyetherpolyamine und/oder weitere Polyole, ausgewählt aus der Gruppe der Polyesterpolyole, Polythioetherpolyole, Polyesteramide, hydroxylgruppenhaltigen Polyacetalen und hydroxylgruppenhaltigen aliphatischen Polycarbonaten oder Mischungen aus mindestens zwei der genannten Polyole verwendet werden.

Die Hydroxylzahl der Polyhydroxylverbindungen beträgt dabei in aller Regel 20 bis 80 und vorzugsweise 28 bis 70.

Geeignete Polyesterpolyole können beispielsweise aus organischen Dicarbonsäuren mit 2 bis 12 Kohlenstoffatomen, vorzugsweise aliphatischen Dicarbonsäuren mit 4 bis 6 Kohlenstoffatomen, mehrwertigen Alkoholen, vorzugsweise Diolen, mit 2 bis 12 Kohlenstoffatomen, vorzugsweise 2 bis 6 Kohlenstoffatomen, nach üblichen Verfahren hergestellt werden. Üblicherweise werden die organischen Polycarbonsäuren und/oder -derivate und mehrwertigen Alkohole, vorteilhafterweise im Molverhältnis von 1 zu 1 bis 1 zu 1,8, vorzugsweise von 1 zu 1,05 bis 1 zu 1,2, katalysatorfrei oder vorzugsweise in Gegenwart von Veresterungskatalysatoren, zweckmäßigerweise in einer Atmosphäre aus Inertgas, wie z. B. Stickstoff, Kohlenmonoxid, Helium, Argon u. a., in der Schmelze bei Temperaturen von 150 bis 250°C, vorzugsweise 180 bis 220°C, gegebenenfalls unter vermindertem Druck bis zu der gewünschten Säurezahl, die vorteilhafterweise kleiner als 10, vorzugsweise kleiner als 2 ist, polykondensiert.

Als hydroxylgruppenhaltige Polyacetale kommen z. B. die aus Glykolen, wie Diethylenglykol, Triethylenglykol, 4,4'-Dihydroxyethoxydiphenyldimethylmethan, Hexandiol und Formaldehyd herstellbaren Verbindungen in Frage. Auch durch Polymerisation cyclischer Acetale lassen sich geeignete Polyacetale herstellen. Als Hydroxylgruppen aufweisende Polycarbonate kommen solche der an sich bekannten Art in Betracht, die beispielsweise durch Umsetzung von Diolen, wie 1,3-Propandiol, 1,4-Butandiol und/oder 1,6-Hexandiol, Diethylenglykol, Triethylenglykol oder Tetraethylenglykol mit Diarylcarbonaten, z. B. Diphenylcarbonat, oder Phosgen hergestellt werden können. Zu den Polyesteramiden zählen z. B. die aus mehrwertigen, gesättigten und/oder ungesättigten Carbonsäuren bzw. deren Anhydriden und mehrwertigen gesättigten und/oder ungesättigten Aminoalkoholen oder Mischungen aus mehrwertigen Alkoholen und Aminoalkoholen und/oder Polyaminen gewonnenen, vorwiegend linearen Kondensate. Geeignete Polyetherpolyamine können aus den oben genannten Polyetherpolyolen nach bekannten Verfahren hergestellt werden. Beispielhaft genannt seien die Cyanoalkylierung von Polyoxyalkylenpolyolen und anschließende Hydrierung des gebildeten Nitrils oder die teilweise oder vollständige Aminierung von Polyoxyalkylenpolyolen mit Aminen oder Ammoniak in Gegenwart von Wasserstoff und Katalysatoren.

Die Polyhydroxyverbindungen können einzeln oder in Form von Mischungen verwendet werden.

Die Polyurethane können erfindungsgemäß ohne oder unter Mitverwendung von Kettenverlängerungs- und/oder Vernetzungsmitteln hergestellt werden.

Als Kettenverlängerungs- und/oder Vernetzungsmittel können Diole und/oder Triole mit Molekulargewichten kleiner als 400 g/mol, vorzugsweise 60 bis 300 g/mol verwendet werden. In Betracht kommen beispielsweise aliphatische, cycloaliphatische und/oder araliphatische Diole mit 2 bis 14, vorzugsweise 4 bis 10 Kohlenstoffatomen, wie z. B. Ethylenglykol, 1,3,-Propandiol, 1,10-Decandiol, o-, m-, p-Dihydroxycyclohexan, Diethylenglykol, Dipropylenglykol und vorzugsweise 1,4-Butandiol, 1,6-Hexandiol und Bis-(2-hydroxyethyl)-hydrochinon, Triole, wie 1,2,4- und 1,3,5-Trihydroxycyclohexan, Triethanolamin, Diethanolamin, Glycerin und Trimethylolpropan und niedermolekulare hydroxylgruppenhaltige Polyalkylenoxide auf Basis Ethylen- und/oder 1,2-Propylenoxid und den vorgenannten Diolen und/oder Triolen als Startermoleküle.

Sofern zur erfindungsgemäßen Herstellung der Polyurethane Kettenverlängerungsmittel, Vernetzungsmittel oder Mischungen davon Anwendung finden, kommen diese zweckmäßigerweise in einer Menge bis zu 10 Gew.-%, bezogen auf das Gewicht der Summe der Polyolverbindungen, zum Einsatz.

Als Treibmittel können die aus der Polyurethanchemie allgemein bekannten Fluorchlorkohlenwasserstoffe (FCKW) sowie hoch- und/oder perfluorierte Kohlenwasserstoffe verwendet werden. Erfindungsgemäß können weiterhin insbesondere aliphatische und/oder cycloaliphatische Kohlenwasserstoffe, insbesondere Pentan und Cyclopentan oder Acetale, wie z. B. Methylal und CO₂, als Treibmittel eingesetzt werden. Diese physikalischen Treibmittel werden üblicherweise der Polyolkomponente zugesetzt. Sie können jedoch auch in der Isocyanatkomponente oder als Kombination sowohl der Polyolkomponente als auch der Isocyanatkomponente zugesetzt werden.

Möglich ist auch die Verwendung mehrer Treibmittel zusammen, insbesondere in Form einer Emulsion der Polyolkomponente. Als Emulgatoren, sofern sie Anwendung finden, werden üblicherweise oligomere Acrylate eingesetzt, die als Seitengruppen Polyoxyalkylen- und Fluoralkanreste gebunden enthalten und einen Fluorgehalt von ungefähr 5 bis 30 Gew.-% aufweisen. Derartige Produkte sind aus der Kunststoffchemie hinreichend bekannt, und beispielsweise in EP 0 351 614 A offenbart. Die eingesetzte Menge des Treibmittels bzw. der Treibmittelmischung liegt dabei bei 1 bis 25 Gew.-%, vorzugsweise 1 bis 15 Gew.-%, jeweils bezogen auf das Gesamtgewicht der eingesetzten Komponenten.

Weiterhin ist es möglich und üblich, als Treibmittel der Polyolkomponente Wasser in einer Menge von 0,5 bis 15 Gew.-%, vorzugsweise 1 bis 5 Gew.-%, bezogen auf das Gesamtgewicht der eingesetzten Komponenten, zuzusetzen. Der Wasserzusatz kann in Kombination mit dem Einsatz der anderen beschriebenen Treibmittel erfolgen.

Vorzugsweise wird im Sinne der Erfindung Wasser als Treibmittel benutzt.

Als Katalysatoren zur Herstellung der Polyurethane werden insbesondere Verbindungen verwendet, die die Reaktion der reaktiven Wasserstoffatome, insbesondere Hydroxylgruppen enthaltender Verbindungen, mit den organischen, gegebenenfalls modifizierten Polyisocyanaten stark beschleunigen. In Betracht kommen organische Metallverbindungen, vorzugsweise organische Zinnverbindungen, wie Zinn-(II)-salze von organischen Carbonsäuren, z. B. Zinn-(II)-acetat, Zinn-(II)-octoat, Zinn-(II)-ethylhexoat und Zinn-(II)-laurat, und die Dialkylzinn-(lV)-salze von organischen Carbonsäuren.

Geeignet sind beispielsweise Dibutylzinndiacetat, Dibutylzinndilaurat, Dibutylzinnmaleat und Dioctylzinndiacetat. Die organischen Metallverbindungen werden allein oder vorzugsweise in Kombination mit stark basischen Aminen eingesetzt. Genannt seien beispielsweise Amidin, wie 2,3-Dimethyl-3,4,5,6-tetrahydropyrimidin, tertiäre Amine, wie Triethylamin, Tributylamin, Dimethylbenzylamin, N-Methyl-, N-Ethyl-, N-Cyclohexylmorpholin, N,N,N',N'-Tetramethylethylendiamin, N,N,N',N'-Tetramethylbutandiamin, N,N,N',N'-Tetramethylhexan-1,6-diamin, Pentamethyldiethylentriamin, Tetramethyldiaminoethylether, Bis-(dimethylaminopropyl)-harnstoff, Dimethylpiperazin, 1,2-Dimethylimidazol, 1-Aza-bicyclo-(3,3,0)-octan und vorzugsweise 1,4-Diazabicyclo-(2,2,2)-octan, und Aminoalkanolverbindungen, wie Triethanolamin, Triisopropanolamin, N-Methyl- und N-Ethyldiethanolamin und Dimethylethanolamin.

Als Katalysatoren kommen ferner in Betracht: Tris-(dialkylaminoalkyl)-s-hexahydrotriazine, insbesondere Tris-(N,N-dimethylamino-propyl)-s-hexahydrotriazin, Tetraalkylammoniumhydroxide, wie Tetramethylammoniumhydroxid, Alkalihydroxid, wie Natriumhydroxid, und Alkalialkoholate, wie Natriummethylat und Kaliumisopropylat, sowie Alkalisalze von langkettigen Fettsäuren mit 10 bis 20 C-Atomen und gegebenenfalls seitenständigen OH-Gruppen.

Vorzugsweise verwendet werden 0,001 bis 5 Gew.-%, insbesondere 0,05 bis 2 Gew.-% Katalysator bzw. Katalysatorkombination, bezogen auf das Gewicht der Aufbaukomponenten.

Der Reaktionsmischung zur erfindungsgemäßen Herstellung der Polyurethane können gegebenenfalls noch weitere Hilfsmittel und/oder Zusatzstoffe zugesetzt werden. Genannt seien beispielsweise Flammschutzmittel, Stabilisatoren, Füllstoffe, Farbstoffe, Pigmente und Hydrolyseschutzmittel sowie fungistatische und bakteriostatisch wirkende Substanzen.

Geeignete Flammschutzmittel sind beispielsweise Trikresylphosphat, Tris-(2-chlorethyl)phosphat, Tris-(2-chlorpropyl)-phosphat, Tetrakis-(2-chlorethyl)-ethylendiphosphat, Dimethylmethanphosphonat, Diethanolaminomethylphosphonsäurediethylester sowie handelsübliche halogenhaltige und halogenfreie Flammschutzmittel. Außer den bereits genannten halogensubstituierten Phosphaten können auch anorganische oder organische Flammschutzmittel, wie roter Phosphor, Aluminiumoxidhydrat, Antimontrioxid, Arsenoxid, Ammoniumpolyphosphat und Calciumsulfat, Blähgraphit oder Cyanursäurederivate, wie z. B. Melamin, oder Mischungen aus mindestens zwei Flammschutzmitteln, wie z. B. Ammoniumpolyphosphaten und Melamin sowie gegebenenfalls Maisstärke oder Ammoniumpolyphosphat, Melamin und Blähgraphit und/oder gegebenenfalls aromatische Polyester zum Flammfestmachen der Polyisocyanatpolyadditionsprodukte verwendet werden. Besonders wirksam erweisen sich dabei Zusätze an Melamin. Im Allgemeinen hat es sich als zweckmäßig erwiesen, 5 bis 50 Gew.-%, vorzugsweise 5 bis 30 Gew.-%, der genannten Flammschutzmittel für jeweils 100 Gew.-% der übrigen eingesetzten Komponenten zu verwenden.

Als Stabilisatoren werden insbesondere oberflächenaktive Substanzen, d.h. Verbindungen eingesetzt, welche zur Unterstützung der Homogenisierung der Ausgangsstoffe dienen und gegebenenfalls auch geeignet sind, die Zellstruktur des Polyurethans zu regulieren. Genannt seien beispielsweise Emulgatoren, wie die Natriumsalze der Rizinusölsulfate oder Fettsäuren sowie Salze von Fettsäuren mit Aminen, z. B. ölsaures Diethylamin, stearinsaures Diethanolamin, ricinolsaures Diethanolamin, Salze von Sulfonsäuren, z. B. Alkali- oder Ammoniumsalze von Dodecylbenzol- oder Dinaphthylmethandisulfonsäure und Ricinolsäure; Schaumstabilisatoren, wie Siloxanoxalkylenmischpolymerisate und andere Organopolysiloxane, oxethylierte Alkylphenole, oxethylierte Fettalkohole, Paraffinöle, Rizinusöl- bzw. Rizinolsäureester, Türkischrotöl und Erdnussöl, und Zellregler, wie Paraffine, Fettalkohole und Dimethylpolysiloxane. Als Stabilisatoren kommen vorwiegend Organopolysiloxane zur Anwendung, die wasserlöslich sind. Dabei handelt es sich um Polydimethylsiloxanreste, an denen eine Polyetherkette aus Ethylenoxid und Propylenoxid angepfropft ist. Die oberflächenaktiven Substanzen werden üblicherweise in Mengen von 0,01 bis 5 Gew.-%, bezogen auf 100 Gew.-% der übrigen eingesetzten Komponenten eingesetzt.

Als Füllstoffe, insbesondere verstärkend wirkende Füllstoffe, sind die an sich bekannten, üblichen organischen und anorganischen Füllstoffe, Verstärkungsmittel, Beschwerungsmittel, Mittel zur Verbesserung des Abriebverhaltens in Anstrichfarben, Beschichtungsmittel usw. zu verstehen. Im Einzelnen seien beispielhaft genannt: anorganische Füllstoffe, wie silikatische Mineralien, beispielsweise Schichtsilikate, wie Antigorit, Serpentin, Hornblenden, Ampibole, Chrisotil und Talkum, Metalloxide, wie Kaolin, Aluminiumoxide, Titanoxide und Eisenoxide, Metallsalze, wie Kreide, Schwerspat und anorganische Pigmente, wie Cadmiumsulfid und Zinksulfid, sowie Glas u. a.. Vorzugsweise verwendet werden Kaolin (China Clay), Aluminiumsilikat und Copräzipitate aus Bariumsulfat und Aluminiumsilikat sowie natürliche und synthetische faserförmige Mineralien, wie Wollastonit, Metall- und insbesondere Glasfasern verschiedener Länge, die gegebenenfalls geschlichtet sein können. Als organische Füllstoffe kommen beispielsweise in Betracht: Kohle, Kollophonium, Cyclopentadienylharze und Pfropfpolymerisate sowie Cellulosefasern, Polyamid-, Polyacrylnitril-, Polyurethan-, Polyesterfasern auf der Grundlage von aromatischen und/oder aliphatischen Dicarbonsäureestern und insbesondere Kohlenstofffasern. Die anorganischen und organischen Füllstoffe können einzeln oder als Gemische verwendet werden und werden der Reaktionsmischung vorteilhafterweise in Mengen von 0,5 bis 50 Gew.-%, vorzugsweise 1 bis 40 Gew.-%, bezogen auf das Gewicht der übrigen eingesetzten Komponenten, eingesetzt, wobei jedoch der Gehalt an Matten, Vliesen und Geweben aus natürlichen und synthetischen Fasern Werte bis 80 Gew.-% erreichen kann.

Nähere Angaben über die oben genannten anderen üblichen Hilfs- und Zusatzstoffe sind der Fachliteratur, beispielsweise der Monographie von J. H. Saunders und K. C. Frisch "High Polymers" Band XVI, "Polyurethanes", Teil 1 und 2, Verlag Interscience Publishers 1962 bzw. 1964, oder dem oben zitierten Kunststoffhandbuch, "Polyurethane", Band VII, Hanser-Verlag München, Wien, 1. bis 3. Auflage, zu entnehmen.

Zur Herstellung der erfindungsgemäßen Polyurethane werden die organischen und/oder modifizierten organischen Polyisocyanate, die Polyoldispersion und gegebenenfalls die weiteren gegenüber Isocyanaten reaktive Wasserstoffatome aufweisenden Verbindungen sowie weiteren Bestandteilen in solchen Mengen zur Umsetzung gebracht, dass das Äquivalenzverhältnis von NCO-Gruppen der Polyisocyanate zur Summe der reaktiven Wasserstoffatome der übrigen Komponenten weniger als 0,95: 1, vorzugsweise weniger als 0,70 : 1, beträgt.

Polyurethanschaumstoffe können beispielsweise nach dem one-shot-Verfahren, beispielsweise mit Hilfe der Hochdruck- oder Niederdruck-Technik in offenen oder geschlossenen Formwerkzeugen, beispielsweise metallischen Formwerkzeugen hergestellt werden. Üblich ist auch das kontinuierliche Auftragen des Reaktionsgemisches auf geeignete Bandstrassen oder der diskontinuierliche Eintrag in offene Blockformen zur Erzeugung von Schaumblöcken.

Formschaumstoffen können auch nach dem Zweikomponentenverfahren hergestellt werden.

Blockschaumstoffe werden üblicherweise nach dem Mehrkomponenten-Verfahren hergestellt. Die Reaktionsprodukte werden bei Blockschäumen in einem Mischkopf zusammengeführt und direkt oder über einen Trog auf die offene Schäumbahn gegeben.

Die Temperaturen liegen dabei vorzugsweise zwischen 20 und 25 °C.

Die Ausgangskomponenten werden bei einer Temperatur von 15 bis 90 °C, vorzugsweise von 20 bis 60 °C und insbesondere von 20 bis 35 °C, gemischt und in das offene oder gegebenenfalls unter erhöhtem Druck in das geschlossene Formwerkzeug eingebracht oder bei einer kontinuierlichen Arbeitsstation auf ein Band, das die Reaktionsmasse aufnimmt, aufgetragen. Die Vermischung kann mechanisch mittels eines Rührers, mittels einer Rührschnecke oder durch eine Hochdruckvermischung in einer Düse durchgeführt werden. Die Formwerkzeugtemperatur beträgt zweckmäßigerweise 20 bis 110 °C, vorzugsweise 30 bis 60 °C und insbesondere 35 bis 55 °C.

Die Polyurethanschaumstoffe weisen vorteilhafterweise eine Dichte von 10 bis 150 kg/m³, vorzugsweise von 40 bis 60 kg/m³ bei Formschäumen und vorzugsweise von 14 bis 100 kg/m³ und insbesondere von 20 bis 80 kg/m³ bei Blockschäumen, auf. Die Stauchhärten liegen dann im Bereich von 1 bis 20 kPa, vorzugsweise bei 1,5 bis 12 kPa.

Die erfindungsgemäßen Polyoldispersionen besitzen ein gutes Fliessverhalten unter starker Scherbelastung und sind daher insbesondere für die Herstellung von Polyurethanschäumen geeignet. Dadurch erhöht sich die Filtrationsgeschwindigkeit beim Reinigen der Polyoldispersion nach der Produktion oder es wird für gleiche Durchsätze weniger Filterfläche benötigt.

Weiterhin zeigen sie eine hohe Lagerstabilität und sehr gute Verarbeitungseigenschaften bei der Weiterverarbeitung zu Polyurethanendprodukten. In Schaumformen mit komplizierten Geometrien (Automobilteppichrückenhinterschäumung, Automobilsitzformen usw.) fließt das Reaktionsgemisch gut, was zur Verringerung der Lunkerbildung führt.

Aufgrund des verbesserten Zellöffnungsverhaltens beim Einsatz der erfindungsgemäßen Polyoldispersionen kann zum Beispiel in Kaltschaumrezepturen der Einsatz von Zellöffnungspolyolen und anderer Prozesshilfsmittel eingeschränkt werden, was die Rezeptur verbilligt, eine mögliche Quelle für Dosierfehler ausschaltet und die Schaumeigenschaften verbessert. Hervorzuheben sind beispielsweise verbesserte Reißdehnungen und Weiterreißfestigkeiten bei Formschäumen bzw. bessere Werte für Zugfestigkeit, Dehnung und Druckverformungsrest bei konventionellen Blockschaumstoffen mit erhöhter Tragfähigkeit.

### BEISPIELE

### Beispiel 1

Als erfindungsgemäße Copolymere(C) werden die folgenden Copolymere 1 bis 18 durch radikalische Polymerisation erhalten. In Tabelle 1 sind die Anteile der einzelnen Monomere an den Copolymeren in Gew.-% angegeben:

**Tabelle 1**

| **Nr.** | **Stearyl-acrylat [Gew.-%]** | **Styrol [Gew.-%]** | **Butyl-acrylat [Gew.-%]** | **Acrylnitril [Gew.-%]** | **Polyetherol-Macromer [Gew.-%]** | **M_{W} [g/mol]** |
|---|---|---|---|---|---|---|
| **1** | 44,44 | 44,44 | - | - | 11,12 | 18100 |
| **2** | 88,88 | - | - | - | 11,12 | 9600 |
| **3** | 33,33 | 33,33 | - | - | 33,33 | 19200 |
| **4** | 33,33 | 33,33 | - | - | 33,33 | 9300 |
| **5** | 50,00 | - | - | - | 50,00 | 14900 |
| **6** | 33,33 | - | 33,33 | - | 33,33 | 13900 |
| **7** | 33,33 | - | 33,33 | - | 33,33 | 9400 |
| **8** | 50,00 | - | - | - | 50,00 | 11800 |
| **9** | 33,33 | - | 33,33 | - | 33,33 | 3800 |
| **10** | 33,33 | - | 33,33 | - | 33,33 | 45800 |
| **11** | 33,33 | - | 33,33 | - | 33,33 | 10700 |
| **12** | 33,33 | - | 33,33 | - | 33,33 | 13100 |
| **13** | 50,00 | - | - | - | 50,00 | 12600 |
| **14** | 16,53 | 33,33 | - | - | 49,53 | 30000 |
| **15** | 20,33 | 20,33 | - | - | 59,33 | 68800 |
| **16** | 30,33 | - | - | - | 69,67 | 38100 |
| **17** | 15,33 | 15,33 | - | - | 59,33 | 10000 |
| **18** | 33,33 | - | - | 33,33 | 33,33 | - |

Das Molekulargewicht wird über GPC mit Polystyolstandard bestimmt.

Mit den Copolymeren (C) werden erfindungsgemäße Polyoldispersionen hergestellt.
1) Die Dispersionsbestandteile werden in einem Rührbehälter bei Umgebungstemperatur vorgelegt. Wenn das Vorlegen bei Umgebungstemperatur wegen hoher Viskosität nicht möglich ist, werden die Edukte vorgewärmt.
2) Falls die Dispersionsbestandteile nicht schon bei dieser Temperatur vorgelegt werden, erfolgt das Aufheizen des Komponentengemisches unter Rühren auf 130 °C bzw. auf eine Temperatur, die höher als die Schmelztemperatur der dispersen Phase ist.
3) Die Mischung wird über eine Zahnkranzdispergiermaschine oder per Ultraschall homogenisiert.
4) Der Homogenisator wird entfernt, das Material in einen Sammelbehälter überführt und auf Raumtemperatur abgekühlt.

Die Zusammensetzungen der einzelnen Polyoldispersionen sind in Tabelle 2 dargestellt.

Die Teilchengrößenverteilungen werden mit einem Malvern Mastersizer gemessen. Die einzelnen Werte bedeuten:
d10: 10% vom Gesamtvolumen der Partikel haben einen Durchmesser, der kleiner ist als der angegebene Wert
d50: 50% vom Gesamtvolumen der Partikel haben einen Durchmesser, der kleiner ist als der angegebene Wert
d90: 90% vom Gesamtvolumen der Partikel haben einen Durchmesser, der kleiner ist als der angegebene Wert

**Tabelle 2**

| | Copolymer (aus Tabelle 1) [g] | | | | | | | | | | Polymer (P) [g] | Polyol [g] | TGV Malvern | | |
|---|---|---|---|---|---|---|---|---|---|---|---|---|---|---|---|
| | | | | | | | | | | | | | d10 | d50 | d90 |
| Nr. | 4 | 6 | 7 | 8 | 9 | 10 | 11 | 14 | 15 | 16 | | | | | |
| 2.1 | 0,34 | - | - | - | - | - | - | - | - | - | 3,375 | 11,285 | 2,36 | 20,72 | 59,85 |
| 2.2 | - | 0,34 | - | - | - | - | - | - | - | - | 3,375 | 10,875 | 3,45 | 55,921 | 178,90 |
| 2.3 | - | 0,75 | - | - | - | - | - | - | - | - | 3,375 | 11,285 | 3,75 | 65,90 | 172,47 |
| 2.4 | - | - | 0,34 | - | - | - | - | - | - | - | 3,375 | 10,875 | 4,87 | 116,43 | 467,35 |
| 2.5 | - | - | 0,75 | - | - | - | - | - | - | - | 3,375 | 11,285 | 4,19 | 119,07 | 329,71 |
| 2.6 | - | - | - | 0,34 | - | - | - | - | - | - | 3,375 | 10,875 | 3,86 | 103,79 | 351,03 |
| 2.7 | - | - | - | 0,75 | - | - | - | - | - | - | 3,375 | 11,285 | 3,79 | 107,98 | 329,63 |
| 2.8 | - | - | - | - | 0,34 | - | - | - | - | - | 3,375 | 10,875 | 2,31 | 47,86 | 164,31 |
| 2.9 | - | - | - | - | 0,75 | - | - | - | - | - | 3,375 | 11,285 | 1,88 | 28,28 | 79,70 |
| 2.10 | - | - | - | - | - | 0,34 | - | - | - | - | 3,375 | 10,875 | 1,18 | 6,46 | 31,06 |
| 2.11 | - | - | - | - | - | - | 0,34 | - | - | - | 3,375 | 11,285 | 2,85 | 68,47 | 173,69 |
| 2.12 | - | - | - | - | - | - | 0,75 | - | - | - | 3,375 | 10,875 | 4,21 | 75,62 | 203,97 |
| 2.13 | - | - | - | - | - | - | - | 0,34 | - | - | 3,375 | 11,285 | 1,14 | 4,81 | 50,92 |
| 2.14 | - | - | - | - | - | - | - | 0,75 | - | - | 3,375 | 10,875 | 1,03 | 2,24 | 7,90 |
| 2.15 | - | - | - | - | - | - | - | - | 0,34 | - | 3,375 | 11,285 | 1,44 | 10,03 | 22,07 |
| 2.16 | - | - | - | - | - | - | - | - | 0,75 | - | 3,375 | 10,875 | 1,14 | 3,29 | 9,55 |
| 2.17 | - | - | - | - | - | - | - | - | - | 0,34 | 3,375 | 11,275 | 1,18 | 4,52 | 32,81 |

In den Tabellen 3 und 4 sind erfindungsgemäße Polyoldispersionen abgebildet, die zusätzlich einen Emulgator enthalten.

**Tabelle 3**

| | Copolymer (C) (aus Tabelle 1) [g] | | | | | | | | | | | | T-Maz 85 [g] | Polymer (P) [g] | Polyol [g] | TGV Malvern | | |
|---|---|---|---|---|---|---|---|---|---|---|---|---|---|---|---|---|---|---|
| | | | | | | | | | | | | | | | | d10 | d50 | d90 |
| Nr. | 2 | 3 | 4 | 5 | 6 | 7 | 8 | 9 | 10 | 14 | 15 | 16 | | | | | | |
| 3.1 | 0,07 | - | - | - | - | - | - | - | - | - | - | - | 0,27 | 3,375 | 11,285 | 1,91 | 38,41 | 213,94 |
| 3.2 | - | 0,07 | - | - | - | - | - | - | - | - | - | - | 0,27 | 3,375 | 11,285 | 2,18 | 49,07 | 216,64 |
| 3.3 | - | - | 0,07 | - | - | - | - | - | - | - | - | - | 0,27 | 3,375 | 11,285 | 3,57 | 68,87 | 131,11 |
| 3.4 | - | - | 0,27 | - | - | - | - | - | - | - | - | - | 0,07 | 3,375 | 11,285 | 2,85 | 28,41 | 79,85 |
| 3.5 | - | - | - | 0,07 | - | - | - | - | - | - | - | - | 0,27 | 3,375 | 11,285 | 2,97 | 59,53 | 214,12 |
| 3.6 | - | - | - | 0,17 | - | - | - | - | - | - | - | - | 0,17 | 3,375 | 11,285 | 2,90 | 80,22 | 215,89 |
| 3.7 | - | - | - | - | 0,07 | - | - | - | - | - | - | - | 0,27 | 3,375 | 11,285 | 4,77 | 77,87 | 193,56 |
| 3.8 | - | - | - | - | 0,27 | - | - | - | - | - | - | - | 0,07 | 3,375 | 11,285 | 4,92 | 94,65 | 226,48 |
| 3.9 | - | - | - | - | - | 0,07 | - | - | - | - | - | - | 0,27 | 3,375 | 11,285 | 3,35 | 87,43 | 283,70 |
| 3.10 | - | - | - | - | - | 0,17 | - | - | - | - | - | - | 0,17 | 3,375 | 11,285 | 4,91 | 112,48 | 316,70 |
| 3.11 | - | - | - | - | - | 0,27 | - | - | - | - | - | - | 0,07 | 3,375 | 11,285 | 5,80 | 126,18 | 370,47 |
| 3.12 | - | - | - | - | - | - | 0,07 | - | - | - | - | - | 0,27 | 3,375 | 11,285 | 3,86 | 84,52 | 245,34 |
| 3.13 | - | - | - | - | - | - | 0,17 | - | - | - | - | - | 0,17 | 3,375 | 11,285 | 4,94 | 92,34 | 246,53 |
| 3.14 | - | - | - | - | - | - | 0,27 | - | - | - | - | - | 0,07 | 3,375 | 11,285 | 5,26 | 120,62 | 463,08 |
| 3.15 | - | - | - | - | - | - | - | 0,07 | - | - | - | - | 0,27 | 3,375 | 11,285 | 3,25 | 84,36 | 193,82 |
| 3.16 | - | - | - | - | - | - | - | 0,17 | - | - | - | - | 0,17 | 3,375 | 11,285 | 2,37 | 58,70 | 137,47 |
| 3.17 | - | - | - | - | - | - | - | 0,27 | - | - | - | - | 0,07 | 3,375 | 11,285 | 2,06 | 45,15 | 104,02 |
| 3.18 | - | - | - | - | - | - | - | - | 0,07 | - | - | - | 0,4927 | 3,375 | 11,285 | 2,24 | 43,77 | 93,86 |
| 3.19 | - | - | - | - | - | - | - | - | 0,17 | - | - | - | 0,17 | 3,375 | 11,285 | 1,74 | 25,91 | 59,41 |
| 3.20 | - | - | - | - | - | - | - | - | 0,27 | - | - | - | 0,07 | 3,375 | 11,285 | 1,32 | 13,27 | 47,36 |
| 3.21 | - | - | - | - | - | - | - | - | - | 0,07 | - | - | 0,27 | 3,375 | 11,285 | 3,17 | 99,17 | 209,36 |
| 3.22 | - | - | - | - | - | - | - | - | - | 0,17 | - | - | 0,17 | 3,375 | 11,285 | 1,91 | 13,32 | 106,76 |
| 3.23 | - | - | - | - | - | - | - | - | - | 0,27 | - | - | 0,07 | 3,375 | 11,285 | 1,30 | 8,62 | 19,35 |
| 3.24 | - | - | - | - | - | - | - | - | - | - | 0,07 | - | 0,27 | 3,375 | 11,285 | 2,24 | 47,76 | 100,73 |
| 3.25 | - | - | - | - | - | - | - | - | - | - | 0,17 | - | 0,17 | 3,375 | 11,285 | 2,19 | 25,37 | 65,22 |
| 3.26 | - | - | - | - | - | - | - | - | - | - | 0,27 | - | 0,07 | 3,375 | 11,285 | 1,70 | 13,31 | 26,67 |
| 3.27 | - | - | - | - | - | - | - | - | - | - | - | 0,07 | 0,27 | 3,375 | 11,285 | 1,69 | 23,26 | 59,50 |
| 3.28 | - | - | - | - | - | - | - | - | - | - | - | 0,17 | 0,17 | 3,375 | 11,285 | 1,22 | 9,62 | 38,78 |
| 3.29 | - | - | - | - | - | - | - | - | - | - | - | 0,27 | 0,27 | 3,375 | 11,285 | 1,16 | 3,61 | 22,57 |

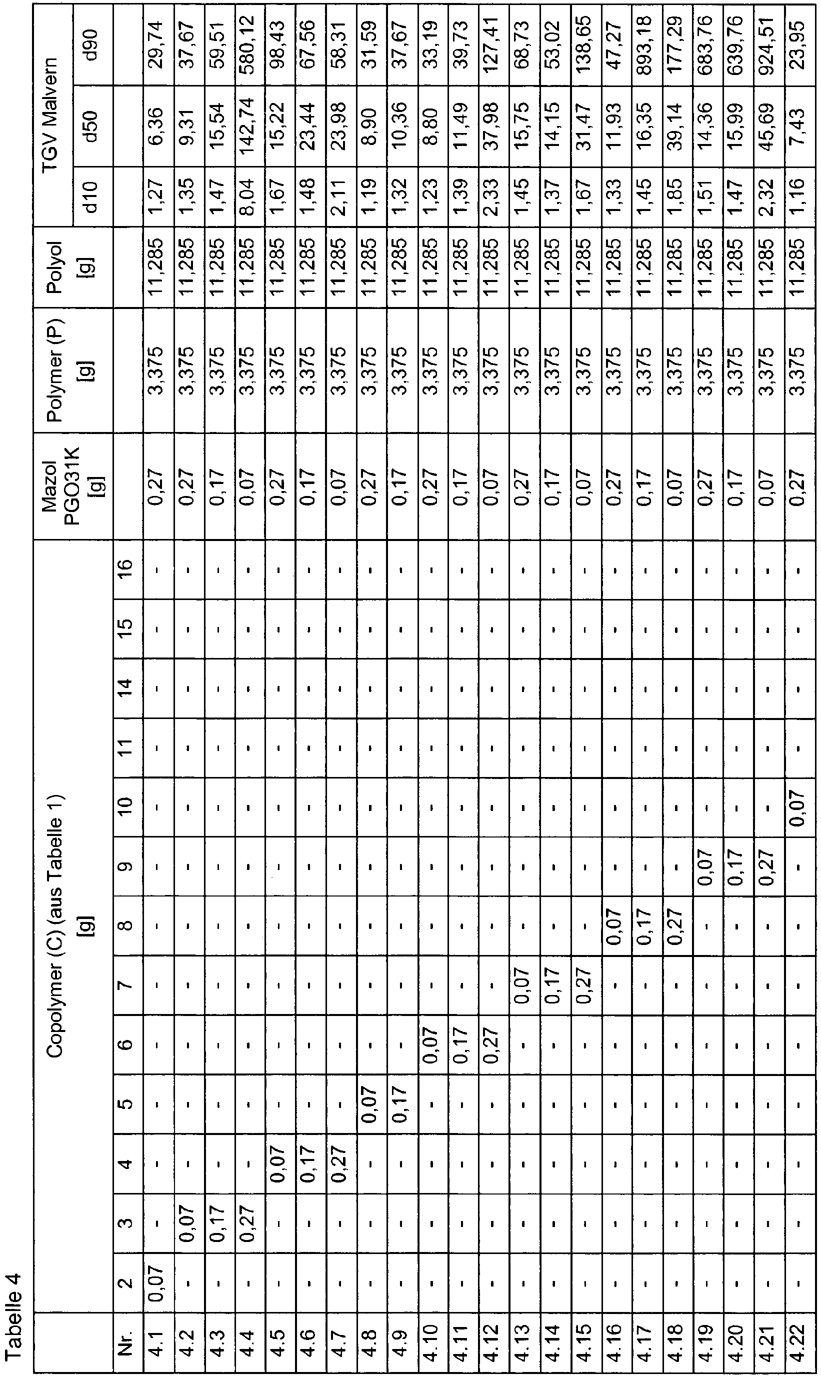

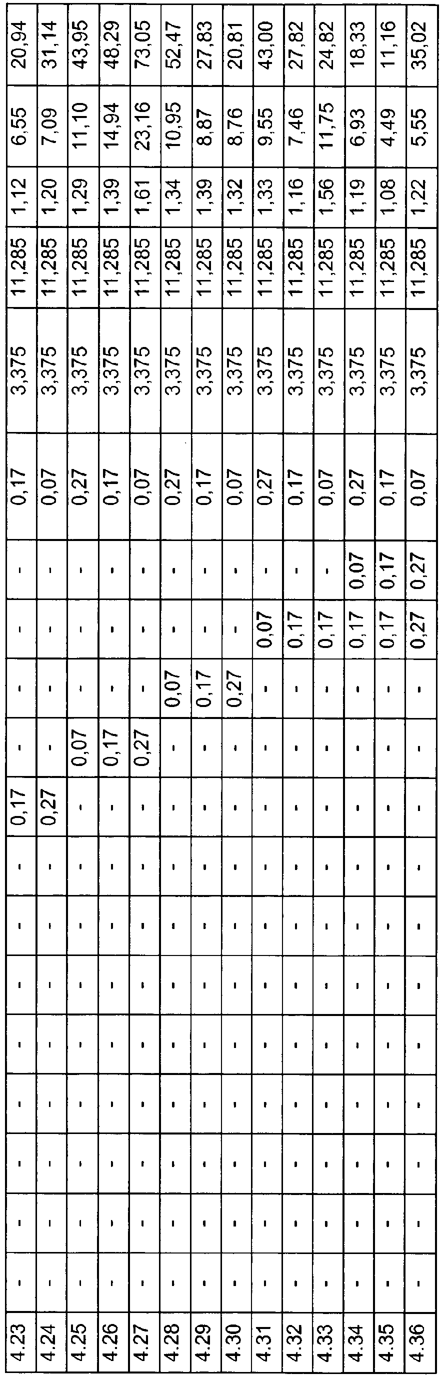

Als thermoplastisches Polymer (P) liegt ein niedermolekulares Polyethylen vor. Als Polyol wird ein Polyetherpolyol aus Glycerin, Propylenoxid und Ethylenoxid eingesetzt.

Die zusätzlichen Emulgatoren (Tabellen 3 und 4) sind zum einen Mazol PGO 31 K, ein Trigylcerin-Monooleat, und zum anderen T-Maz 85, ein Polysorbit-Trisoctadecanoat.

### Beispiel 2

Herstellung einer erfindungsgemäßen Dispersion durch Verfahren (V')
1) Die Dispersionsbestandteile werden in einem Rührbehälter bei beliebiger Temperatur / in beliebigem Aggregatszustand vorgelegt. Wenn das Vorlegen bei Umgebungstemperatur wegen hoher Viskosität nicht möglich ist, werden die Edukte vorgewärmt.
2) Falls die Dispersionsbestandteile nicht schon bei dieser Temperatur vorgelegt werden, erfolgt das Aufheizen des Komponentengemisches unter Rühren auf 150 °C bzw. auf eine Temperatur, die höher als die Schmelztemperatur der dispersen Phase ist.
3) Die Mischung wird fünf theoretischen Passagen über die Emulgiermaschine (Zahnkranzdispergiermaschine, Umfangsgeschwindigkeit ca. 20 m/s) im Kreis gefahren, wobei das gesamte System auf 150 °C temperiert ist.
4) Die Kreisfahrweise wird ausgeschaltet und das Material aus dem Vorlagebehälter über die temperierte (150 °C) Zahnkranzdispergiermaschine mit einer Flussrate von 1,2 kg/h +/-20% über einen Doppelrohrkühler mit einer Kühlfläche von 0,04 m² bei einer Kühlrate von 60 K/Min ausgetragen. Das Kühlmedium hat dabei eine Temperatur von 15 °C, die Kühleraustrittstemperatur des Produktes beträgt 25 °C.

Mastersizer (Messung der Partikelgrößenverteilung):
Mastersizer 2000 (Prinzip der statischen Lichtstreuung); Proben werden mit Isopropanol auf die zur Messung erforderliche Konzentration verdünnt.

## Patentansprüche

1. Dispersion, enthaltend
(i) wenigstens ein bei 25 °C und 1013 mbar flüssiges Polymer und
(ii) wenigstens ein Polymerpartikelgemisch umfassend wenigstens einen schmelzbaren Feststoff und wenigstens ein Copolymer (C),
**dadurch gekennzeichnet, dass** das wenigstens eine Copolymer (C) ein Copolymer ist aufgebaut aus wenigstens einem α,β-ethylenisch ungesättigten Monomer und wenigstens einem polymerisierbaren Polymer aus der Klasse der flüssigen Polymere, ausgewählt aus der Gruppe bestehend aus Polyolen, die auf einem ungesättigten Starteralkohol basieren, oder durch Umsetzung der Polyole mit ungesättigten Säuren oder Estern oder Isocyanaten erhalten werden, polymeren Isocyanaten, die durch Umsetzung von NCO-terminierten polymeren Isocyanaten mit Hydroxyalkoylacrylaten oder -methacrylaten erhalten werden, Polyurethan-Präpolymeren, die durch Umsetzung NCO-terminierten Polyurethan-Präpolymeren mit Hydroxyalkoylacrylaten oder -methacrylaten erhalten werden, Poly(meth)acrylaten, die durch Umsetzung von Poly(meth)acrylaten mit ungesättigten Alkoholen erhalten werden, Polyisobuten, das durch Umsetzung von PIBSA (Polyisobuten-Bernsteinsäure-Anhydrid) mit ungesättigten Alkoholen erhalten wird, und Mischungen davon.

2. Dispersion nach Anspruch 1, **dadurch gekennzeichnet, dass** das flüssiges Polymer (i) ausgewählt ist aus der Gruppe bestehend aus Polyolen, polymeren Isocyanaten, Polyacrylaten, filmbildenden Polymeren, Polyurethan-Präpolymeren, Polyisobuten und Mischungen davon.

3. Dispersion nach Anspruch 2, **dadurch gekennzeichnet, dass** das Polyol ausgewählt ist aus der Gruppe bestehend aus Polyetherolen, Polyesterolen und Mischungen davon.

4. Dispersion nach einem der Ansprüche 1 bis 3, **dadurch gekennzeichnet, dass** der wenigstens eine schmelzbare Feststoff ausgewählt ist aus der Gruppe bestehend aus Schwefel, Harnstoff, Phosphor, thermoplastischen Polymeren (P) und Mischungen davon.

5. Dispersion nach Anspruch 4, **dadurch gekennzeichnet, dass** das wenigstens eine thermoplastische Polymer (P) ausgewählt ist aus der Gruppe bestehend aus Polystyrol, substituiertem Polystyrol, Poly(styrol-co-acrylnitril), Polyacrylat, Polymethacrylat, Polyolefinen, Polyestern, Polyamiden, thermoplastischen Polyurethanen, Copolymeren enthaltend wenigstens zwei der in den vorgenannten Polymeren vorliegenden Monomeren und Mischungen davon.

6. Dispersion nach einem der Ansprüche 1 bis 5, **dadurch gekennzeichnet, dass** zusätzlich wenigstens ein Emulgator vorliegt.

7. Verfahren (V) zur Herstellung einer Dispersion nach einem der Ansprüche 1 bis 6, umfassend die Schritte
(A) Erwärmen einer Mischung (I) enthaltend wenigstens einen schmelzbaren Feststoff, wenigstens ein bei 25 °C und 1013 mbar flüssiges Polymer und wenigstens ein Copolymer (C), wobei das wenigstens eine Copolymer (C) ein statistisches Copolymer ist aufgebaut aus wenigstens einem α,β-ethylenisch ungesättigten Monomeren und wenigstens einem polymerisierbaren Polymer aus der Klasse der flüssigen Polymere, ausgewählt aus der Gruppe bestehend aus Polyolen, die auf einem ungesättigten Starteralkohol basieren, oder durch Umsetzung der Polyole mit ungesättigten Säuren oder Estern oder Isocyanaten erhalten werden, polymeren Isocyanaten, die durch Umsetzung von NCO-terminierten polymeren Isocyanaten mit Hydroxyalkoylacrylaten oder -methacrylaten erhalten werden, Polyurethan-Präpolymeren, die durch Umsetzung NCO-terminierten Polyurethan-Präpolymeren mit Hydroxyalkoylacrylaten oder -methacrylaten erhalten werden, Poly(meth)acrylaten, die durch Umsetzung von Poly(meth)acrylaten mit ungesättigten Alkoholen erhalten werden, Polyisobuten, das durch Umsetzung von PIBSA (Polyisobuten-Bemsteinsäure-Anhydrid) mit ungesättigten Alkoholen erhalten wird, und Mischungen davon unter Erhalt einer Mischung (II) und
(C) Abkühlen der Mischung (II).

8. Verfahren nach Anspruch 7, **dadurch gekennzeichnet, dass** es nach Schritt (A) und vor Schritt (C) den folgenden Schritt (B) aufweist:
(B) Dispergierung der Mischung (II).

9. Verfahren (V') zur Hersteliung einer Dispersion nach einem der Ansprüche 1 bis 6, umfassend die Schritte:
(A') Erwärmen einer Mischung (I') enthaltend wenigstens einen schmelzbaren Feststoff, wenigstens ein bei 25 °C und 1013 mbar flüssiges Polymer und wenigstens ein Copolymer (C') unter Erhalt einer Mischung (II'),
(B) Dispergierung der Mischung (II') und
(C) Abkühlen der Mischung (II') mit einer Kühlrate von wenigstens 10 K/min.

10. Verfahren nach einem der Ansprüche 7 bis 9, **dadurch gekennzeichnet, dass** in Schritt (C) keine Scherung stattfindet.

11. Dispersion, herstellbar durch ein Verfahren nach einem der Ansprüche 7 bis 10.

12. Verwendung einer Dispersion nach einem der Ansprüche 1 bis 6 oder einer Dispersion herstellbar durch ein Verfahren gemäß einem der Ansprüche 7 bis 10 als Lackrohstoffe für die Automobilindustrie, als Dispersionsrohstoffe für Bautenanstriche, Dichtmassen, Zement, Papier, Textil, Leder, Klebrohstoffe, als Treibstoffadditive oder Dach-Beschichtungen.

13. Verwendung einer Dispersion nach einem der Ansprüche 1 bis 6 oder einer Dispersion herstellbar durch ein Verfahren gemäß einem der Ansprüche 7 bis 10 zur Herstellung von Polyurethanen.

14. Verfahren zur Herstellung von Polyurethanen, wobei mindestens eine Dispersion gemäß einem der Ansprüche 1 bis 6 oder einer Dispersion herstellbar durch ein Verfahren gemäß einem der Ansprüche 7 bis 10 mit mindestens einem Polyisocyanat umgesetzt wird.

## Claims

1. A Dispersion comprising
(i) at least one polymer which is liquid at 25°C and 1013 mbar, and
(ii) at least one polymer particle mixture comprising at least one meltable solid and at least one copolymer (C),
wherein said at least one copolymer (C) is a Copolymer synthesized from at least one α,β-ethylenically unsaturated monomer and at least one polymerizable polymer from the class of liquid polymers, selected from the group consisting of polyols based on an unsaturated starter alcohol, or obtained by reaction of the polyols with unsaturated acids or esters or isocyanates, polymeric isocyanates obtained by reation of NCO-terminated polymeric isocyanates with hydroxyalkyl acrylates or methacrylates, Polyurethane prepolymers obtained by reaction of NCO-terminated Polyurethane prepolymers with hydroxyalkyl acrylates or methacrylates, poly(meth)acrylates obtained by reaction of poly(meth)acrylates with unsaturated alcohols, polyisobutene obtained by reaction of PIBSA (polyisobutenylsuccinic anhydride) with unsaturated alcohols, and mixtures thereof.

2. The Dispersion according to claim 1, wherein the liquid polymer (i) is selected from the group consisting of polyols, polymeric isocyanates, polyacrylates, film-forming polymers, Polyurethane prepolymers, polyisobutene, and mixtures thereof.

3. The dispersion according to claim 2, wherein she polyol is selected from the group consisting of polyetherols, polyesterols, and mixtures thereof.

4. The dispersion according to any one of claims 1 to 3, wherein the at least one meltable solid is selected from the group consisting of sulfur, urea, phosphorous, thermoplastic polymers (P), and mixtures thereof.

5. The dispersion according to claim 4, wherein the at least one thermoplastic polymer (P) is selected from the group consisting of polystyrene, substituted polystyrene, poly(styrene-co-acrylonitrile), polyacrylate, polymethacrylate, polyolefins, polyesters, polyamides, thermoplastic polyurethanes, copolymers comprising at least two of the monomers present in the aforementioned polymers, and mixtures thereof.

6. The dispersion according to any one of claims 1 to 5, wherein at least one emulsifier is additionally present.

7. A process (V) for preparing a dispersion according to any one of claims 1 to 6, comprising the steps of
(A) heating a mixture (I) comprising at least one meltable solid, at least one polymer which is liquid at 25°c and 1013 mbar, and at least one copolymer (C), said at least one Copolymer (C) being a random copolymer synthesized from at least one α,β-ethylenically unsaturated monomer and at least one polymerizable polymer from the class of liquid Polymers, selected from the group consisting of polyols based on an unsaturated starter alcohol, or obtained by reaction of the polyols with unsaturated acids or esters or isocyanates, polymeric isocyanates obtained by reation of NCO-terminated polymeric isocyanates with hydroxyalkyl acrylates or methacrylates, polyurethane prepolymers obtained by reaction of NCO-terminated Polyurethane prepolymers with hydroxyalkyl acrylates or methacrylates, poly(meth)acrylates obtained by reaction of poly(meth)acrylates with unsaturated alcohols, polyisobutene obtained by reaction of PIBSA (polyisobutenylsuccinic anhydride) with unsaturated alcohols, and mixtures thereof, to give a mixture (II), and
(C) cooling the mixture (II).

8. The process according to claim 7, which has, after step (A) and before step (C), the following step (B):
(B) dispersing the mixture (II).

9. A process (V') for preparing a dispersion according to any one of claims 1 to 6, comprising the steps of:
(A')heating a mixture (I') comprising at least one meltable solid, at least one polymer which is liquid at 25°C and 1013 mbar, and at least one Copolymer (C'), to give a mixture (II'),
(B) dispersing the mixture (II'), and
(C) cooling the mixture (II') with a cooling rate of at least 10 K/min.

10. The process according to any one of claims 7 to 9, wherein no shearing takes place in step (C).

11. A dispersion preparable by a process according to any one of claims 7 to 10.

12. The use of a dispersion according to any one of claims 1 to 6 or of a dispersion preparable by a process according to any one of claims 7 to 10 as coating base materials for the automobile industry, as dispersion base materials for architectural coatings, sealants, cement, paper, textile, leather, adhesive base materials, as fuel additives or roof coatings.

13. The use of a dispersion according to any one of claims 1 to 6 or of a dispersion preparable by a process according to any one of claims 7 to 10 to prepare polyurethanes.

14. A process for preparing polyurethanes, in which at least one dispersion according to any one of claims 1 to 6 or a dispersion preparable by a process according to any one of claims 7 to 10 is reacted with at least one Polyisocyanate.

## Revendications

1. Dispersion, contenant :
(i) au moins un polymère liquide à 25 °C et 1 013 mbar et
(ii) au moins un mélange de particules polymères comprenant au moins un solide fusible et au moins un copolymère (C),
**caractérisée en ce que** le ou les copolymères (C) sont un copolymère constitué d'au moins un monomètre α,β-éthyléniquement insaturé et d'au moins un polymère polymérisable de la classe des polymères liquides, choisi dans le groupe constitué par les polyols, à base d'un alcool de départ insaturé ou obtenus par réaction des polyols avec des acides ou esters ou isocyanates insaturés, les isocyanates polymères, obtenus par réaction d'isocyanates polymères à terminaison NCO avec des acrylates ou méthacrylates d'hydroxyalkyle, les prépolymères de polyuréthanne, obtenus par réaction de prépolymères de polyuréthane à terminaison NCO avec des acrylates ou méthacrylates d'hydroxyalkyle, les poly(méth)acrylates, obtenus par réaction de poly(méth)acrylates avec des alcools insaturés, le polyisobutène, obtenu par réaction de PIBSA (polyisobutène-anhydride de l'acide succinique) avec des alcools insaturés, et leurs mélanges.

2. Dispersion selon la revendication 1, **caractérisée en ce que** le polymère liquide (i) est choisi dans le groupe constitué par les polyols, les isocyanates polymères, les polyacrylates, les polymères filmogènes, les prépolymères de polyuréthane, le polyisobutène et leurs mélanges.

3. Dispersion selon la revendication 2, **caractérisée en ce que** le polyol est choisi dans le groupe constitué par les polyétherols, les polyestérols et leurs mélanges.

4. Dispersion selon l'une quelconque des revendications 1 à 3, **caractérisée en ce que** le ou les solides fusibles sont choisis dans le groupe constitué par le soufre, l'urée, le phosphore, les polymères thermoplastiques (P) et leurs mélanges.

5. Dispersion selon la revendication 4, **caractérisée en ce que** le ou les polymères thermoplastiques (P) sont choisis dans le groupe constitué par le polystyrène, le polystyrène substitué, le poly(styrène-co-acrylonitrile), le polyacrylate, le polyméthacrylate, les polyoléfines, les polyesters, les polyamines, les polyuréthanes thermoplastiques, les copolymères contenant au moins deux des monomères présents dans les polymères susmentionnées et leurs mélanges.

6. Dispersion selon l'une quelconque des revendications 1 à 5, **caractérisée en ce qu'**au moins un émulsifiant est également présent.

7. Procédé (V) de fabrication d'une dispersion selon l'une quelconque des revendications 1 à 6, comprenant les étapes suivantes :
(A) le chauffage d'un mélange (I) contenant au moins un solide fusible, au moins un polymère liquide à 25 °C et 1 013 mbar et au moins un copolymère (C), le ou les copolymères (C) étant un copolymère statistique constitué d'au moins un monomère α,β-éthyléniquement insaturé et d'au moins un polymère polymérisable de la classe des polymères liquides, choisi dans le groupe constitué par les polyols, à base d'un alcool de départ insaturé ou obtenus par réaction des polyols avec des acides ou esters ou isocyanates insaturés, les isocyanates polymères, obtenus par réaction d'isocyanates polymères à terminaison NCO avec des acrylates ou méthacrylates d'hydroxyalkyle, les prépolymères de polyuréthanne, obtenus par réaction de prépolymères de polyuréthane à terminaison NCO avec des acrylates ou méthacrylates d'hydroxyalkyle, les poly(méth)acrylates, obtenus par réaction de poly(méth)acrylates avec des alcools insaturés, le polyisobutène, obvenu par réfaction de PIBSA (polyisobutène-anhydride de l'acide succinique) avec des alcools insaturés, et leurs mélanges, pour obtenir un mélange (II), et
(C) le refroidissement du mélange (II).

8. Procédé selon la revendication 7, **caractérisé en ce qu'**il comprend après l'étape (A) et avant l'étape (C) l'étape (B) suivante:
(B) la dispersion du mélange (II).

9. Procédé (V') de fabrication d'une dispersion selon l'une quelconque des revendications 1 à 6, comprenant les étapes suivantes :
(A') le chauffage d'un mélange (I') contenant au moins un solide fusible, au moins un polymère liquide à 25 °C et 1 013 mbar et au moins un copolymère (C') pour obtenir un mélange (II'),
(B) la dispersion du mélange (II') et
(C) le refroidissement du mélange (II') à une vitesse de refroidissement d'au moins 10 K/min.

10. Procédé selon l'une quelconque des revendications 7 à 9, **caractérisé en ce qu'**aucun cisaillement n'a lieu à l'étape (C).

11. Dispersion, prouvant être fabriquée par un procédé selon l'une quelconque des revendication 7 à 10.

12. Utilisation d'une dispersion selon l'une quelconque des revendications 1 à 6 ou d'une dispersion pouvant être fabriquée par un procédé selon l'une quelconque des revendications 7 à 10 en tant que matières premières de pointure pour l'industrie automobile, en tant que matières premières de dispersion pour peintures de bâtiment, matériaux d'étanchéité, ciment, papier, textile, cuir, matières premières adhésives, en tant qu'additifs pour carburant ou en tant que revêtements de toit.

13. Utilisation d'une dispersion selon l'une quelconque des revendications 1 à 6 ou d'une dispersion pouvant être fabriquée par un procédé selon l'une quelconque des revendications 7 à 10 pour la fabrication de polyuréthanes.

14. Procédé de fabrication de polyuréthannes, dans lequel au moins une dispersion selon l'une quelconque des revendications 1 à 6 ou une dispersion pouvant être fabriquée par un procédé selon l'une quelconque des revendications 7 à 10 est mise en réaction avec au moins un polyisocyanate.
